# EUROPEAN PATENT APPLICATION

(11) **EP 4 815 567 A1**
(43) Date of publication of application: **30.09.2026**
(21) Application number: 23959134.0
(22) Date of filing: 22.11.2023
(51) Int. Cl.: H04W 48/02

(54) **CHANNEL ACCESS METHOD AND APPARATUS, TERMINAL, CHIP AND STORAGE MEDIUM**

(71) Applicant: GUANGDONG OPPO MOBILE TELECOMMUNICATIONS CORP., LTD., Dongguan, Guangdong 523860 (CN)
(72) Inventor: ZHANG, Shichang, Dongguan, Guangdong 523860 (CN)
(74) Representative: Penza, Giancarlo
(86) International application number: PCT/CN2023/133109
(87) International publication number: WO 2025/107159

(57) **Abstract**

Embodiments of the present application provide a channel access method. The method comprises: sending a first physical sidelink feedback channel (PSFCH) to a second terminal, wherein the first PSFCH is used for instructing the second terminal to access a channel in a channel access mode of a specified type so as to use a reserved resource of the second terminal. In this way, the possibility of the second terminal accessing the channel in the channel access mode of the specified type can be improved; when the second terminal accesses the channel in the channel access mode of the specified type, the second terminal does not need to execute channel access of type 1; because the energy loss of the channel access process of the type 1 is high, the method is beneficial to reducing the energy loss of the second terminal executing channel access.

## Description

### TECHNICAL FIELD

Embodiments of the disclosure relate to the technical field of communications, and particularly to, a channel access method and apparatus, a terminal, a chip, and a storage medium.

### BACKGROUND

For sidelink communication operating in an unlicensed spectrum, when a terminal has no available Channel Occupancy Time (COT), it needs to access a channel through a Type 1 channel access mechanism, which may consume too much energy for the terminal to perform channel access.

### SUMMARY

Embodiments of the disclosure provide a channel access method and apparatus, a terminal, a chip, and a storage medium.

According to a first aspect, an embodiment of the disclosure provides a channel access method, which is applied to a first terminal. The method includes: a first Physical Sidelink Feedback Channel (PSFCH) is transmitted to a second terminal, the first PSFCH being used to instruct the second terminal to access a channel by a specified type of channel access scheme to use a reserved resource of the second terminal.

According to a second aspect, an embodiment of the disclosure provides a channel access method, which is applied to a second terminal. The method includes: a first Physical Sidelink Feedback Channel (PSFCH) from a first terminal is received, the first PSFCH being used to instruct the second terminal to access a channel by a specified type of channel access scheme to use a reserved resource of the second terminal.

According to a third aspect, an embodiment of the disclosure provides a channel access method, which is applied to a first terminal. The method includes: Inter-User equipment Coordination (IUC) information is transmitted to a second terminal, the ICU information being used to indicate a plurality of transmission resources of the second terminal, and the second terminal being capable of accessing a channel by a specified type of channel access scheme to use some or all of the plurality of transmission resources.

According to a fourth aspect, an embodiment of the disclosure provides a channel access method, which is applied to a second terminal. The method includes: Inter-User equipment Coordination (IUC) information from a first terminal is received, the ICU information being used to indicate a plurality of transmission resources of the second terminal, and the second terminal being capable of accessing a channel by a specified type of channel access scheme to use some or all of the plurality of transmission resources.

According to a fifth aspect, an embodiment of the disclosure provides a channel access apparatus. The apparatus includes: a first transmitting unit, configured to transmit a first Physical Sidelink Feedback Channel (PSFCH) to a second terminal, the first PSFCH being used to instruct the second terminal to access a channel by a specified type of channel access scheme to use a reserved resource of the second terminal.

According to a sixth aspect, an embodiment of the disclosure provides a channel access apparatus. The apparatus includes: a first receiving unit, configured to receive a first Physical Sidelink Feedback Channel (PSFCH) from a first terminal, the first PSFCH being used to instruct the second terminal to access a channel by a specified type of channel access scheme to use a reserved resource of the second terminal.

According to a seventh aspect, an embodiment of the disclosure provides a channel access apparatus. The apparatus includes: a second transmitting unit, configured to transmit Inter-User equipment Coordination (IUC) information to a second terminal, the ICU information being used to indicate a plurality of transmission resources of the second terminal, and the second terminal being capable of accessing a channel by a specified type of channel access scheme to use some or all of the plurality of transmission resources.

According to an eighth aspect, an embodiment of the disclosure provides a channel access apparatus. The apparatus includes: a second receiving unit, configured to receive Inter-User equipment Coordination (IUC) information from a first terminal, the ICU information being used to indicate a plurality of transmission resources of the second terminal, and the second terminal being capable of accessing a channel by a specified type of channel access scheme to use some or all of the plurality of transmission resources.

According to a ninth aspect, an embodiment of the disclosure provides a terminal including a processor and a memory. The memory is configured to store a computer program, and the processor is configured to invoke and execute the computer program stored in the memory to perform the method described in any one of the first to fourth aspects.

According to a tenth aspect, an embodiment of the disclosure provides a chip. The chip includes a processor configured to invoke and execute a computer program from a memory, to cause a device mounted with the chip to perform the method described in any one of the first to fourth aspects.

According to an eleventh aspect, an embodiment of the disclosure provides a computer-readable storage medium for storing a computer program that causes a computer to perform the method described in any one of the first to fourth aspects.

According to a twelfth aspect, an embodiment of the disclosure provides a computer program product including computer program instructions that cause a computer to perform the method described in any one of the first to fourth aspects.

According to a thirteenth aspect, an embodiment of the disclosure provides a computer program that, when run on a computer, causes the computer to perform the method described in any one of the first to fourth aspects.

In the method, the first terminal may transmit a first PSFCH to the second terminal, and the first PSFCH is used to instruct the second terminal to access a channel by a specified type of channel access scheme to use reserved resource of the second terminal. In this way, it is possible to improve the possibility that the second terminal accesses the channel by the specified type of channel access scheme, and when the second terminal accesses the channel by the specified type of channel access scheme, the second terminal does not need to perform channel access of the Type 1. Since the energy loss of the channel access process of the Type 1 is high, the method is beneficial to reduce the energy loss of the second terminal performing the channel access.

### BRIEF DESCRIPTION OF THE DRAWINGS

The accompanying drawings described herein are intended to provide a further understanding of the disclosure, and constitute a part of the disclosure, and the schematic embodiments of the disclosure and the description thereof are intended to explain the disclosure, and do not constitute an undue limitation of the disclosure. In the drawings:
FIG. 1 is a schematic diagram showing that a part of symbols in a time slot are used for Sidelink (SL) transmission according to an embodiment of the disclosure.
FIG. 2 is a schematic diagram showing a slot structure of a PSCCH and a PSSCH according to an embodiment of the disclosure.
FIG. 3 is a schematic diagram showing time-domain positions of 4 DMRS symbols when a PSSCH has 13 symbols according to an embodiment of the disclosure.
FIG. 4 is a schematic diagram showing frequency-domain positions of PSSCH DMRS according to an embodiment of the disclosure.
FIG. 5 is a schematic diagram showing a PSCCH and PSSCH resource pool in NR-V2X according to an embodiment of the disclosure.
FIG. 6 is a schematic diagram showing an Interleaved Resource Block (IRB) according to an embodiment of the disclosure.
FIG. 7 is a schematic diagram showing a frame structure based on an IRB according to an embodiment of the disclosure.
FIG. 8 is a schematic diagram showing an RB set according to an embodiment of the disclosure.
FIG. 9 is a first schematic flowchart of a channel access method according to an embodiment of the disclosure.
FIG. 10 is a schematic diagram of transmission opportunities of a first PSFCH according to an embodiment of the disclosure.
FIG. 11 is a second schematic flowchart of a channel access method according to an embodiment of the disclosure.
FIG. 12 is a first schematic structural diagram of a channel access apparatus according to an embodiment of the disclosure.
FIG. 13 is a second schematic structural diagram of a channel access apparatus according to an embodiment of the disclosure.
FIG. 14 is a third schematic structural diagram of a channel access apparatus according to an embodiment of the disclosure.
FIG. 15 is a fourth schematic structural diagram of a channel access apparatus according to an embodiment of the disclosure.
FIG. 16 is a schematic structural diagram of a communication device according to an embodiment of the disclosure.
FIG. 17 is a schematic structural diagram of a chip according to an embodiment of the disclosure.

### DETAILED DESCRIPTION

Hereinafter, the technical solutions in the embodiments of the disclosure will be described with reference to the accompanying drawings in the embodiments of the disclosure, and it is apparent that the described embodiments are part of the embodiments of the disclosure, but not all the embodiments. Based on the embodiments in the disclosure, all other embodiments obtained by those skilled in the art without creative efforts fall within the scope of protection of the disclosure.

The technical solutions of the embodiments of the disclosure can be applied to various sidelink communication systems. In order to facilitate understanding of the technical solutions of the embodiments of the disclosure, the related technologies of the embodiments of the disclosure will be described below, and the related technologies below, as optional solutions, can be arbitrarily combined with the technical solutions of the embodiments of the disclosure, and all combinations thereof belong to the scope of protection of the embodiments of the disclosure.

### 1. Time slot structure in New Radio-Vehicle to Everything (NR-V2X)

In NR-V2X, a Physical Sidelink Shared Channel (PSSCH) and its associated Physical Sidelink Control Channel (PSCCH) are transmitted in a same time slot, and the PSCCH occupies 2 or 3 time-domain symbols. Herein, the time-domain resource allocation of NR-V2X takes time slots as allocation granularity, and uses parameters *sl-startSLsymbols* and*sl-lengthSLsymbols* to configure a start point and a length of the time-domain symbols used for sidelink transmission in a time slot. The last symbol in this part of symbols is used as a Guard Period (GP), and the PSSCH and the PSCCH can only use the remaining time-domain symbols. However, if a Physical Sidelink Feedback Channel (PSFCH) transmission resource is configured in a time slot, the PSSCH and the PSCCH cannot occupy a time-domain symbol used for PSFCH transmission, and Automatic Gain Control (AGC) and GP symbols before the symbol.

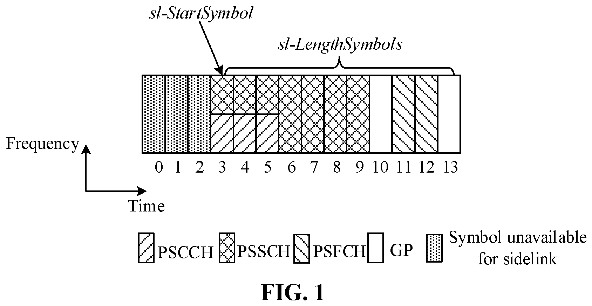

FIG. 1 is a schematic diagram showing that a part of symbols in a time slot are used for Sidelink (SL) transmission. As shown in FIG. 1, if the network configures that *sl-StartSymbol*=3 and *sl-LengthSymbols*=11, then it indicates that 11 time-domain symbols in one time slot starting from symbol index 3 are available for sidelink transmission. There are PSFCH transmission resources in this time slot, and the PSFCH occupies symbol 11 and symbol 12, where symbol 11 serves as an AGC symbol of the PSFCH, symbols 10 and 13 are used as GPs, respectively, and time-domain symbols available for PSSCH transmission are symbols 3 to 9; and the PSCCH occupies 3 time-domain symbols, namely symbols 3, 4 and 5, and symbol 3 is usually used as an AGC symbol.

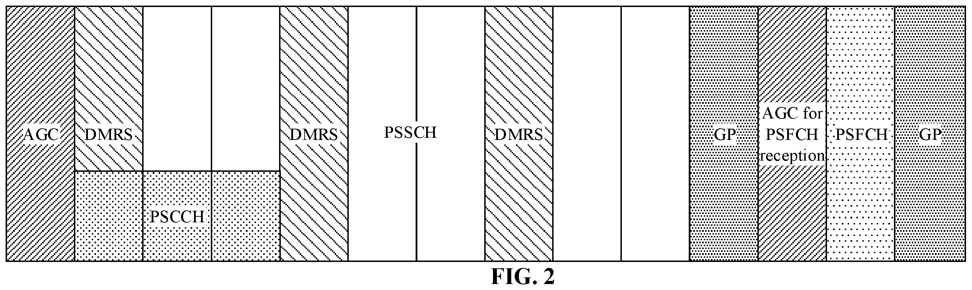

In addition to the PSCCH and the PSSCH, the PSFCH may also exist in a sidelink time slot in the NR-V2X, as shown in FIG. 2. Within a time slot, the first Orthogonal Frequency Division Multiplexing (OFDM) symbol is fixed for AGC. On the AGC symbol, a User Equipment (UE) duplicates the information transmitted on the second symbol. One symbol is left at the end of the time slot for transmit-receive switching, which is used for the UE to switch from a transmitting (or receiving) state to a receiving (or transmitting) state. Among the remaining OFDM symbols, the PSCCH may occupy two or three OFDM symbols starting from the second sidelink symbol. In the frequency domain, a number of Physical Resource Blocks (PRBs) occupied by the PSCCH is within the sub-band range of one PSSCH, and if the number of PRBs occupied by the PSCCH is smaller than the size of one subchannel of the PSSCH, or the frequency-domain resource of the PSSCH includes a plurality of subchannels, then the PSCCH may be frequency division multiplexed with the PSSCH on an OFDM symbol where the PSCCH is located.

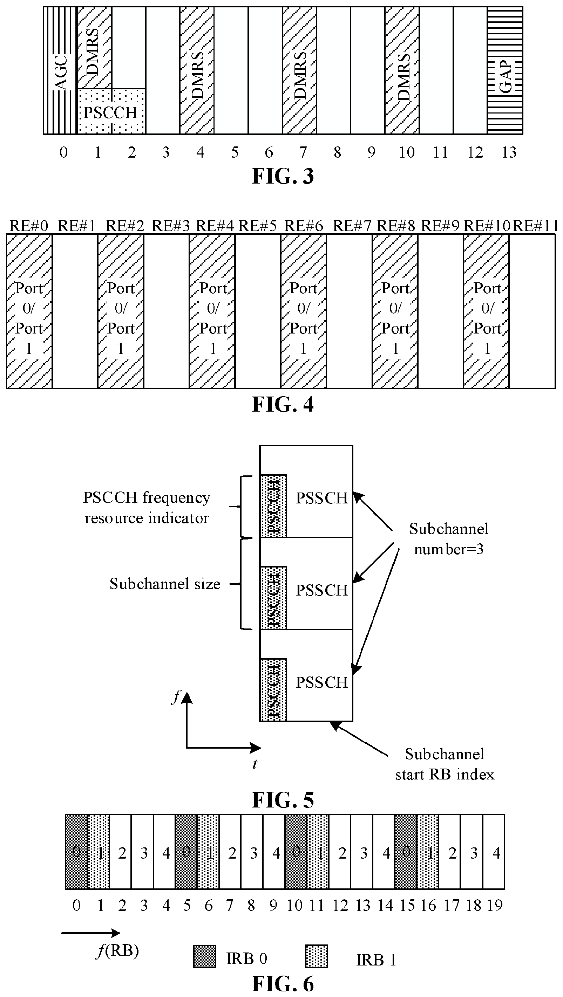

The DMRS of PSSCH in NR-V2X draws on the design in the New Radio (NR) Uu interface, and multiple time-domain PSSCH DMRS patterns are adopted. In a resource pool, the number of adoptable DMRS patterns is related to the number of PSSCH symbols in the resource pool. For a specific number of PSSCH symbols (including the first AGC symbol) and a specific number of PSCCH symbols, the available DMRS patterns and the position of each DMRS symbol in the pattern are shown in Table 1. FIG. 3 gives a schematic diagram showing time-domain positions of 4 DMRS symbols when a PSSCH has 13 symbols.

**Table 1 Number and positions of DMRS symbols under different numbers of PSSCH and PSCCH symbols**

| Number of PSSCH symbols (including first AGC symbol) | DMRS symbol position (relative to the first AGC symbol position) | | | | | |
|---|---|---|---|---|---|---|
| | The number of PSCCH symbols is 2 | | | The number of PSCCH symbols is 3 | | |
| | DMRS Symbol Number | | | DMRS Symbol Number | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

If a plurality of time-domain DMRS patterns are configured in the resource pool, the specific time-domain DMRS pattern is selected by the transmitting UE, and indicated in the first-stage Sidelink Control Information (SCI). Such a design allows a high-speed moving UE to select a high-density DMRS pattern, thereby ensuring the accuracy of channel estimation, while for a low-speed moving UE, a low-density DMRS pattern can be adopted, thereby improving spectral efficiency.

The generation manner of a PSSCH DMRS sequence is almost identical to the generation manner of a PSCCH DMRS sequence, with the only difference being that in the initialization formula *c*ᵢₙᵢₜ of the pseudo-random sequence *c*(*m*), ${N}_{ID} = {\sum }_{i = 0}^{L - 1} {p}_{i} ⋅ {2}^{L - 1 - i}$, where *pᵢ* is an *i*-th bit of the CRC of the PSCCH scheduling the PSSCH, and *L*= 24, which is the number of bits of the PSCCH CRC.

The NR Physical Downlink Shared Channel (PDSCH) and the Physical Uplink Shared Channel (PUSCH) support two frequency-domain DMRS patterns, namely DMRS frequency-domain type 1 and DMRS frequency-domain type 2, and there are two different types (i.e., single-symbol DMRS and dual-symbol DMRS) for each frequency-domain type. The single-symbol DMRS frequency-domain type 1 supports 4 DMRS ports, and single-symbol DMRS frequency-domain type 2 can support 6 DMRS ports. In the case of dual-symbol DMRS, the number of supported ports is doubled. However, in the NR-V2X, since the PSSCH only needs to support two DMRS ports at most, only the single-symbol DMRS frequency-domain type 1 is supported, as shown in FIG. 4.

### 2. Determination of NR-V2X frequency-domain resources

Similar to the LTE-V2X, the frequency-domain resources of the NR-V2X resource pool are also continuous, and the allocation granularity of the frequency-domain resources is also subchannels. The number of PRBs included in one subchannel is {10, 12, 15, 20, 50, 75, 100}, and the size of the minimum subchannel is 10 PRBs, which is much larger than the size (i.e., 4 PRBs) of the minimum subchannel in the LTE-V2X. This is primarily because, in the NR-V2X, the frequency-domain resources of the PSCCH are located within the first subchannel of its associated PSSCH, the frequency-domain resource of the PSCCH is less than or equal to the size of the subchannel of the PSSCH, and the PSCCH occupies 2 or 3 OFDM symbols in the time domain; and if the subchannel size is configured to be relatively small, it will result in limited available resources for the PSCCH, leading to an increased code rate and subsequently degrading the detection performance of the PSCCH. In the NR-V2X, the size of the PSSCH subchannel and the size of the frequency-domain resource of the PSCCH are independently configured, but it is necessary to ensure that the frequency-domain resource of the PSCCH is smaller than or equal to the size of the subchannel of the PSSCH.

The following configuration parameters in configuration information of the NR-V2X resource pool are used to determine frequency-domain resources of the PSCCH and PSSCH resource pool.
1) Subchannel size (*sl-SubchannelSize*), which indicates a number of consecutive PRBs included in a subchannel in the resource pool, and has a value range {10, 12, 15, 20, 50, 75, 100} PRBs;
2) Number of subchannels (*sl-NumSubchannel*), which indicates a number of subchannels included in the resource pool;
3) Subchannel start RB index (*sl-StartRB-Subchannel*), which indicates a start PRB index of the first subchannel in the resource pool;
4) PRB number (*sl-RB-Number*), which indicates a number of consecutive PRBs included in the resource pool; and
5) PSCCH frequency-domain resource indication (*sl-FreqResourcePSCCH*), which indicates a frequency-domain resource size of the PSCCH, and the value range is {10, 12, 15, 20, 25} PRBs.

When the UE determines a resource pool for transmitting or receiving a PSSCH, frequency-domain resources included in the resource pool are *sl-NumSubchannel*consecutive subchannels starting from a PRB indicated by *sl-StartRB-Subchannel*, if, finally, the numnber of PRBs included in the *sl-NumSubchannel* consecutive subchannels is smaller than the number of PRBs indicated by *sl-RB-Number*, the remaining PRBs cannot be used for transmitting or receiving the PSSCH.

In the NR-V2X, the PSCCH is aligned with the frequency-domain start position of the first subchannel of its associated PSSCH, so the start position of each PSSCH subchannel is a possible frequency-domain start position of the PSCCH, and the frequency-domain range of the resource pool of the PSCCH and the PSSCH can be determined according to the above parameters, as shown in FIG. 5.

In the NR-V2X, the PSCCH is used to carry sidelink control information related to resource sensing, which includes:
1) the priority of scheduled transmission;
2) frequency-domain resource allocation, which indicates the number of frequency-domain resources of the PSSCH in the current time slot scheduled by the PSCCH, and the number of frequency-domain resources and the start position of at most two reserved retransmission resources;
3) time-domain resource allocation, which indicates time-domain positions of up to two retransmission resources;
4) reference signal pattern of PSSCH;
5) second-stage SCI format;
6) code rate offset of second-stage SCI;
7) number of ports of PSSCH DMRS;
8) Modulation and Coding Scheme (MCS);
9) MCS table indication;
10) number of PSFCH symbols;
11) resource reservation period, which is for reserving resources for transmission of another Transport Block (TB) in a next period, which does not exist when inter-TB resource reservation is not activated in the resource pool configuration.
12) reserved bits, which are 2 ~ 4 bits, and the specific number of which is configured by the network or preconfigured.

Since the PSCCH and the scheduled PSSCH are always transmitted within a time slot, and the start position of the PRB occupied by the PSCCH is the start position of the first subchannel of the scheduled PSSCH, the time-frequency-domain start position of the scheduled PSSCH is not explicitly indicated in the SCI format 1-A.

### 3. Sidelink transmission on unlicensed spectrum (or Sidelink over Unlicensed spectrum, SL-U)

When sidelink transmission is performed on unlicensed spectrum, sidelink transmission needs to meet specific regulatory requirements, including the requirements of minimum Occupied Channel Bandwidth (OCB) and maximum Power Spectral Density (PSD). For the requirement of OCB, when the UE uses the channel for data transmission, the channel bandwidth occupied by the UE is not less than 80% of one channel bandwidth. For the requirement of maximum PSD, the UE cannot transmit more than 10 dBm of power per 1 MHz. In order to meet the requirements of OCB and PSD regulations, sidelink transmission on unlicensed spectrum needs to adopt an Interlaced Resource Block (IRB) structure. One IRB includes N resource blocks (Rbs) that are discrete in the frequency domain, M IRBs are included in total in the frequency band range, and the RBs included in an m-th IRB are {m, M + m, 2M + m, 3M + m, ...}.

FIG. 6 is a schematic diagram showing an IRB. As shown in FIG. 6, the system bandwidth includes 20 RBs, including 5 IRBs (i.e. M = 5), each IRB includes 4 RBs (i.e. N = 4), and the frequency-domain intervals of two adjacent RBs belonging to a same IRB are the same, that is, 5 RBs apart. The numbers in the boxes in the figure represent IRB indexes.

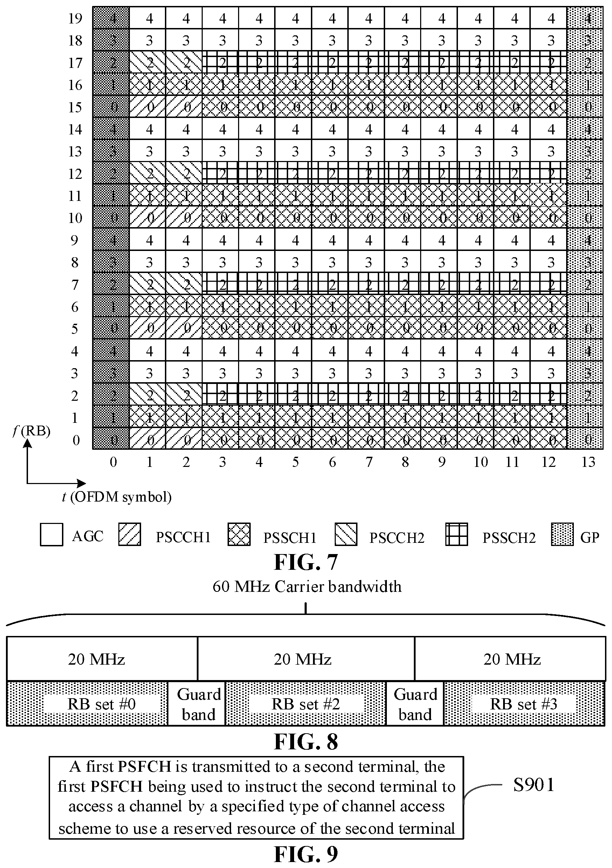

In SL-U system, if IRB-based resource allocation granularity is adopted, channels such as PSCCH and PSSCH of SL-U system should be based on the IRB structure. In this case, the frame structure of the SL-U system is shown in FIG. 7, and the numbers in the boxes in FIG. 7 represent IRB indexes. FIG. 7 is a schematic diagram of a frame structure in which only PSCCH and PSSCH are included in a time slot, and PSFCH is not included. The bandwidth shown in the figure includes 20 RBs, 5 IRB resources are configured, that is, M = 5, each IRB resource includes 4 RBs, and the numbers in the boxes represent IRB indexes. In

FIG. 7, the system configures that the PSCCH occupies one IRB resource, and occupies two OFDM symbols in the time domain; the PSSCH takes the IRB as granularity, the first symbol in the slot is an AGC symbol, and the last symbol in the slot is a GP symbol. In the figure, PSSCH 1 occupies IRB #0 and IRB #1, and its corresponding PSCCH 1 occupies IRB #0. PSSCH 2 occupies IRB #2, and its corresponding PSCCH 2 also occupies IRB #2. It is to be noted that in FIG. 7, for the sake of simplification, resources occupied by the second-order SCI and resources occupied by the PSCCH DMRS and the PSSCH DMRS are not drawn.

On the unlicensed spectrum, the UE accesses the channel through Listen Before Talk (LBT). LBT takes 20 MHz as granularity in the frequency domain, and every 20 MHz is called an RB Set. A carrier can include multiple RB sets, and there is a guard period between the RB sets, as shown in FIG. 8.

### 4. Channel access on unlicensed spectrum

The UE on the unlicensed spectrum may access the channel through a Type 1, Type 2A, Type 2B, or Type 2C LBT.

### Type 1 channel access:

Taking a base station as an example, channel access parameters corresponding to the channel access priority class *p* on the base station side are shown in Table 2. In Table 2, *mₚ* refers to a number of backoff time slots corresponding to the channel access priority class *p*; CW*ₚ* refers to a Contention Window (CW) size corresponding to the channel access priority class *p*; CW_{min,*p*} refers to a minimum value of the CW*ₚ* corresponding to the channel access priority class *p*; CW_{max,*p*} refers to a maximum value of the CW*ₚ* corresponding to the channel access priority class *p*; and T_{mcot,*p*} refers to maximum channel occupancy time length corresponding to the channel access priority class *p*.

The base station may select a corresponding channel access priority class *p* according to the priority of the service to be transmitted, and according to channel access parameters corresponding to the channel access priority class *p* in Table 2, acquire Channel Occupancy Time (COT) for unlicensed spectrum carriers using Type 1 channel access. Within the acquired COT, the base station may perform continuous or discontinuous transmission. The above-described Type 1 LBT by the base station to initiate COT may include the following steps.
1) Set counter N = Nᵢₙᵢₜ, where Nᵢₙᵢₜ is one of random numbers evenly distributed between 0 to CW*ₚ*, and perform step 4).
2) If N > 0, the base station decrements the counter by 1, that is, N = N-1.
3) Perform channel sensing with the length of Tₛₗ (Tₛₗ represents the LBT sensing slot, having a length of 9 µs). If the sensing slot is idle, perform step 4); otherwise, perform step 5).
4) If N = 0, end the channel access procedure; otherwise, perform step 2).
5) Perform channel sensing with the length of T_{d} (where T_{d}=16+*mₚ** 9 [µs]), the result of which is divided into two cases, one case is that at least one sensing slot is occupied, and the other case is that all sensing slots are idle.
6) If the channel sensing result is that all sensing slots are idle within T_{d}, perform step 4); otherwise, perform step 5).

**Table 2 Channel access parameters corresponding to different channel access priority classes p**

| Channel Access Priority Class (*p*) | m*ₚ* | CW_{min,*p*} | CW_{max,*p*} | T_{mcot,*p*} | Allowed CW*ₚ* value |
|---|---|---|---|---|---|
| 1 | 1 | 3 | 7 | 2 ms | {3, 7} |
| 2 | 1 | 7 | 15 | 3 ms | {7, 15} |
| 3 | 3 | 15 | 63 | 8 or 10 ms | {15, 31, 63} |
| 4 | 7 | 15 | 1023 | 8 or 10 ms | {15, 31, 63, 127, 255, 511, 1023} |

If the channel access procedure ends, the base station can use the channel for transmission, and the maximum length of time that the base station can use the channel for transmission cannot exceed T_{mcot,*p*}.

Before the base station starts step 1) of the Type 1 channel access, the base station needs to maintain and adjust the contention window size CW*ₚ*. In the initial case, the contention window size CW*ₚ* is set to the minimum value CW_{min,*p*}; and during transmission, the contention window size CW*ₚ* may be dynamically adjusted within a permissible CW*ₚ* range according to ACK (Acknowledgement) or NACK (Negative Acknowledgement) information received by the base station, which is fed back by the terminal. If the contention window size CW*ₚ* has been increased to the maximum value CW_{max,*p*}, and after maintaining the maximum contention window size CW_{max,*p*} for a certain number of times, the contention window size CW*ₚ* can be reset to the minimum value CW_{min,*p*}.

It should be noted that when the communication device successfully performs the above-described Type 1 LBT, the COT may be initiated on the unlicensed spectrum carrier, and the communication device may perform transmission within the COT or share the COT with other communication devices. If the communication device does not immediately access the channel to perform data transmission, if the communication device needs to perform transmission thereafter, it does not need to perform the Type 1 LBT again, but only needs to perform LBT of shorter duration once. For example, the terminal may only perform LBT with the duration Tₛₗ+ T_{d}, if the channels remains idle within the sensing duration, the communication device can access the channel for transmission; otherwise, the communication device needs to perform the Type 1 LBT again to initiate the COT.

### Type 2A/2B/2C channel access:

When the communication device performs transmission in the COT, the communication device can access the channel through the Type 2A/2B or 2C LBT, and the above three channel access modes are collectively referred to as Type 2 channel access mode. Specifically, under Type 2A channel access, the terminal can perform channel sensing for 25 µs before the transmission starts, and transmit after the channel sensing is successful. Under Type 2B channel access, the terminal can perform channel sensing for 16 µs before the transmission starts, and transmit after the channel sensing is successful. Herein, the gap between the start position of the transmission and the end position of the previous transmission has a size of 16 µs. Under Type 2C channel access, the terminal can directly perform transmission. Herein, the gap between the start position of the transmission and the end position of the previous transmission has a size of not more than 16 µs, and the length of the transmission is not more than 584 µs.

In the SL-U system, when there is no available COT, the terminal can access the channel to transmit the S-SSB through the Type 2-A mode when the following conditions are met: the transmission time does not exceed 1 ms; and the duty cycle of the transmitted S-SSB is not more than 1/20.

### 5. First-stage SCI and second-stage SCI in NR SL

A second-stage SCI design is supported in the NR SL, where the first-stage SCI used to schedule PSSCH and/or SL PRS transmissions is called SCI Format 1-A, and contains the following information 1) to 12).
1) For the priority of scheduled data, it has 3 bits, where 000 represents priority value 1; 001 represents priority value 2, and so on.
2) Frequency resource assignment:
   it contains a Frequency Resource Indicator Value (FRIV);
   if one SCI can indicate a current transmission resource and one reserved resource for retransmission of a current Transport Block (TB), the FRIV is $\left⌈{log}_{2}\left(\frac{{N}_{subChannel}^{SL} \left({N}_{subChannel}^{SL}+1\right)}{2}\right)\right⌉$ bits for indicating an initial subchannel index of the reserved resource, and numbers of subchannels included in the current transmission resource and the one reserved resource;
      If one SCI can indicate the current transmission resource and two reserved resources for retransmission of the current TB, the FRIV is $\left⌈{log}_{2}\left(\frac{{N}_{subChannel}^{SL} \left({N}_{subChannel}^{SL}+1\right) \left(2{N}_{subChannel}^{SL}+1\right)}{6}\right)\right⌉$ bits for indicating initial subchannel indexes of the two reserved resources, and numbers of subchannels included in the current transmission resource and the two reserved resources.
3) Time resource assignment:
   it contains a Time Resource Indicator Value (TRIV); if one PSCCH can indicate a current transmission resource and one reserved resource for retransmission of a current TB, TRIV is 5 bits for indicating a time slot interval of the reserved resource relative to the current transmission resource; if one PSCCH can indicate the current transmission resource and other two reserved resources for retransmission of the current TB, TRIV is 9 bits for indicating the time slot intervals of the two reserved resources with respect to the current transmission resource, that is, the values of t1 and t2 in FIG. 3 to FIG. 12, and the time slot interval is expressed as a number of time slots belonging to the current resource pool.
4) Reference signal pattern of PSSCH: $\left⌈{log}_{2} {N}_{pattern}\right⌉$ bits, where *N*ₚₐₜₜₑᵣₙ is the number of DMRS patterns allowed in the current resource pool.
5) Second-stage SCI format: 2 bits.
   00 represents SCI format 2-A, 01 represents SCI format 2-B, 10 represents SCI format 2-C, and 11 is a reserved state for future versions.
6) Code rate offset of second-stage SCI: 2 bits, where 00, 01, 10 and 11 represent the first, second, third and fourth code rate offset values of the RRC layer configuration, respectively.
7) Number of ports of PSSCH DMRS: 1 bit, where 0 indicates one port (port 1000), 1 indicates two ports (ports 1000 and 1001).
8) Modulation and Coding Scheme (MCS): 5 bits.
9) MCS table indication: 0 ~ 2 bits, depending on the number of allowed MCS tables configured in the resource pool.
10) Number of PSFCH symbols: 1 bit if the PSFCH period is 2 or 4 slots; otherwise, 0 bits.
11) Resource Reservation Period: 4 bits, which is for reserving resources for transmission of another TB in a next period, which does not exist when inter-TB resource reservation is not activated in the resource pool configuration.
12) reserved bits, which are 2 ~ 4 bits, and the specific number of which is configured by the network or preconfigured.

When the Least Significant Bit (LSB) of the reserved bit is configured in the resource pool to indicate whether the terminal supports receiving the resource conflict indication, if the terminal supports the function, the first reserved bit is set to "1", otherwise, it is set to "0"; and the values of the other reserved bits are set to "0".

At present, four second-stage SCI formats are defined in the NR SL, namely, SCI format 2-A, SCI format 2-B, SCI format 2-C, and SCI format 2-D. The SCI format 2-A has a total of 35 bits and contains the following information 1) to 8).
1) Hybrid Automatic Repeat reQuest (HARQ) process: 4 bits.
2) New Data Indicator (NDI): 1 bit.
3) Redundancy Version (RV): 2 bits.
4) Source ID: 8 bits.
5) Distination ID: 6 bits.
6) HARQ feedback activation/deactivation: 1 bit.
7) Unicast/multicast/broadcast indication: 2 bits.
   00 represents broadcast, 01 represents a multicast communication manner requiring feedback of ACK or NACK, 10 represents unicast, and 11 represents a multicast communication manner requiring feedback of only NACK.
8) CSI feedback request: 1 bit.

The SCI format 2-B has a total of 48 bits and is only used to indicate transmission of multicast service(s). Therefore, compared with the SCI format 2-A, the SCI format 2-B does not include the unicast/multicast/broadcast indication field and the CSI feedback request field, but additionally includes the following two information fields 1) and 2).
1) Zone ID: 12 bits.
2) Communication range requirement: 4 bits.

The SCI format 2-C is used to carry an Inter-UE Coordination request or Inter-UE Coordination information, and the information included in the indication is divided into two parts. The first part is other bit fields in SCI format 2-A except the "unicast/multicast/broadcast indication" field; and if the Inter-UE Coordination request is carried in SCI format 2-C, the second part contains the following additional information 1) to 7).
1) Trigger signaling or reference resource set indication: 1 bit.
2) Priority: 3 bits.
3) Number of subchannels: $\left⌈{log}_{2}{N}_{Subchannel}^{SL}\right⌉$ bits, where ${N}_{Subchannel}^{SL}$ is the number of subchannels in the current resource pool.
4) Resource reservation period: if periodic resource reservation is allowed in the current resource pool, then it has $\left⌈{log}_{2} {N}_{rsv _ period}\right⌉$ bits, where *N_{rsv_period}* is the total number of resource reservation periods configured in the current resource pool; and it has 0 bits if periodic resource reservation is not allowed in the current resource pool.
5) Resource selection window: $2 \left(10+\left⌈{log}_{2}\left(10⋅{2}^{μ}\right)\right⌉\right)$ bits for indicating Direct Frame Numbers (DFNs) and time slot indexes corresponding to a start point and an end point of a resource selection window, where *µ* = 0,1,2,3 is a subcarrier spacing index.
6) Resource type: it has 1 bit if the current resource pool is configured to determine the resource type by UE-B; otherwise, it has 0 bit.
7) Padding bits.

If the inter-UE coordination information is carried in the SCI format 2-C, the second part contains the following additional information 1) to 5).
1) Trigger signaling or reference resource set indication: 1 bit.
2) Two {TRIV, FRIV, Reservation Period} combinations - 2(*N_{TRIV}* + *N_{FRIV}* + *Y*) bits.
   Herein, *N_{TRIV}* = 9 ; ${N}_{FRIV} = \left⌈log 2\left(\frac{{N}_{Subchannel}^{SL} \left({N}_{Subchannel}^{SL}+1\right) \left(2{N}_{Subchannel}^{SL}+1\right)}{6}\right)\right⌉$; if periodic resource reservation is allowed in the current resource pool, it has $Y = \left⌈{log}_{2} {N}_{rsv _ period}\right⌉$ bits; otherwise, it has 0 bit;
3) Time-domain position of the first resource: 8 bits, used to indicate an interval of the first resource for the second TRIV relative to the reference time slot, the unit is time slot, and the value range is 0 to 255.
4) Reference time slot: $10 + \left⌈{log}_{2}\left(10⋅{2}^{μ}\right)\right⌉$ bits, for indicating a DFN and a slot index of a reference slot, where *µ* = 0,1,2,3 is the subcarrier spacing index.
5) Frequency-domain position of the first resource: $2 ⋅ \left⌈{log}_{2}{N}_{Subchannel}^{SL}\right⌉$ bits, for indicating a frequency-domain start position of a first resource for the first TRIV and the second TRIV.

### 6. PSFCH in NR SL

The sequence type PSFCH is supported in R16 NR-V2X, which is called PSFCH format 0. This type of PSFCH occupies one PRB in the frequency domain and one OFDM symbol in the time domain, and uses the same sequence type as PUCCH format 0. In one resource pool, the PSFCH resource is configured in a period of 1, 2 or 4 time slots, and in a time slot where the PSFCH resource exists, the PSFCH resource is located on the last OFDM symbol available for sidelink transmission. However, in order to support the transmit-receive switching and AGC adjustment, there are two OFDM symbols before the PSFCH symbol for transmit-receive switching and AGC adjustment, respectively. Further, PSCCH and PSSCH transmission are not allowed on the above three OFDM symbols.

In the R16 NR-V2X, the PSFCH is only used to carry HARQ feedback information, and the capacity of one PSFCH is one bit. In R18, the PSFCH is used to carry resource conflict indication information, in addition to the HARQ feedback information. In order to ensure backward compatibility, the period of the PSFCH resource used for conflict indication and the time slot in which the PSFCH resource is located in each PSFCH resource period are the same as those of the PSFCH resource used for HARQ-ACK feedback in the resource pool, which also means that the resource conflict indication can only be performed in the resource pool in which the PSFCH resource used for HARQ-ACK feedback is configured. In addition, on the time slot in which the PSFCH resource is located, the PRB occupied by the PSFCH resource for the HARQ-ACK feedback is different from the PRB occupied by the PSFCH resource for the resource conflict indication, so as to avoid mutual influence between the resource conflict indication and the HARQ-ACK feedback.

The time-domain position of the PSFCH used for conflict indication may be determined based on the time slot *n*_{cnf} where the conflict resource is located. In this case, the PSFCH for conflict indication is located in a first one of slots which is prior to *n*_{cnf} - *T*₃ (including *n*_{cnf} - *T*₃) and where the PSFCH resource for conflict indication is available. An interval between the time slot where the PSFCH for conflict indication is located and a time slot *n*_{SCI} where an SCI for indication of the conflict resource is located must be not smaller than X, otherwise, the UE-A will not send the resource conflict indication. Herein, X is the minimum interval between the SCI and the PSFCH configured in the resource pool, and is the same as the minimum interval between the PSFCH carrying the HARQ-ACK and the SCI.

The time-domain position of the PSFCH used for conflict indication may also be determined based on the time slot *n*_{SCI} where the SCI for indication of the conflict resource is located. In this case, the PSFCH for conflict indication is located in a first one of slots which is after *n*_{SCI}+X (including *n*_{SCI}+X) and where the PSFCH resource for conflict indication is available. An interval between the time slot where the PSFCH for conflict indication is located and a time slot *n*_{cnf} where the conflict resource is located must be not smaller than *T*₃, otherwise, the UE-A will not send the resource conflict indication.

In the determined PSFCH time-domain position, the transmission resource of the PSFCH is determined according to a time-frequency position of a transmission resource of a PSSCH corresponding to the PSFCH. In the NR-V2X, the following two PSFCH resource determination manners are supported, and which specific manner for determining the PSFCH resource will be adopted is configured according to higher layer signaling.

In a manner 1, a transmission resource of the PSFCH is determined according to a first subchannel of the PSSCH frequency-domain resource.

In a manner 2, the transmission resource of the PSFCH is determined according to all subchannels occupied by the PSSCH in the frequency domain.

In the resource determination manner 1, since the transmission resource of the PSFCH is determined only according to the first subchannel occupied by the PSSCH, the number of feedback resources of the PSFCH is fixed regardless of how many subchannels the PSSCH occupies. In the manner 2, since the number of transmission resources of the PSFCH is determined according to the number of subchannels occupied by the PSSCH, the more subchannels occupied by the PSSCH, the more transmission resources of the PSFCH are. The manner 2 is more suitable for scenarios that require more sidelink HARQ feedback resources, for example, a second type of sidelink HARQ feedback mode in multicast.

The corresponding PSFCH transmission resource set ${R}_{PRB , CS}^{PSFCH}$ can be determined according to the time slot and the subchannel in which the PSSCH is transmitted. An index of a PSFCH transmission resource in the resource set is determined in the order of RBs from low to high and then in the order of Cyclic Shift (CS) pairs from low to high. Further, in the resource set, the transmission resource of the PSFCH is determined by the following formula: $\left({P}_{ID}+{M}_{ID}\right) mod {R}_{PRB , CS}^{PSFCH}$.

Herein, P_{ID} indicates ID information of the transmitting end, that is, the source ID of the transmitting end UE carried in the SCI, for the unicast or NACK-only multicast sidelink HARQ feedback mode, *M*_{ID} = 0; for the multicast sidelink HARQ feedback mode of ACK/NACK, M_{ID} indicates the intra-group identifier of the receiving end UE configured by the higher layer.

### 7. Energy saving of sidelink

In scenarios such as smart homes and smart factories, sidelink communication may be used for the communication of wearable devices. In these scenarios, it is extremely important to ensure the low cost and low power consumption of the devices. However, in the existing sidelink communication system, the terminal needs to access the channel on the unlicensed spectrum through LBT, and during the LBT process, the UE may need to monitor the channel for a long time and cannot enter a deep sleep state.

The related technologies/terms related to the embodiments of the disclosure have been briefly described above, which will not be repeatedly described in the following embodiments.

It is to be understood that the terms "system" and "network" are often used interchangeably herein. The term "and/or" herein is only an association relationship describing associated objects and represents that three relationships may exist. For example, A and/or B may represent three conditions: i.e., independent existence of A, existence of both A and B and independent existence of B. In addition, the character "/" in the disclosure generally indicates that the relationship between the related objects is "or". It should be further understood that the "indication" mentioned in the embodiments of the disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B. It should be further understood that the term "correspond" mentioned in the embodiments of the disclosure may mean that there is a direct correspondence or an indirect correspondence between two items, may also mean that there is an association relationship between the two items, and may also be a relationship such as indication and being indicated, configuration and being configured, etc. It should be further understood that the "predefined" or "predefined rule" mentioned in the embodiments of the disclosure may be achieved by pre-storing corresponding codes, tables or other means used for indicating relevant information in devices (e.g., including terminal devices and network devices), and the specific implementation thereof is not limited in the disclosure. For example, "predefined" may refer to what is defined in a protocol. It should be further understood that in the embodiments of the disclosure, the "protocol" may be a standard protocol in the communication field. For example, the protocol may include an LTE protocol, an NR protocol, and related protocols applied in future communication systems, which are not limited in the disclosure.

It should be further understood that the embodiments of the disclosure do not limit the specific form of the terminal. As an example, the terminal in the embodiments of the disclosure may refer to an access terminal, a User Equipment (UE), a user unit, a user station, a mobile station, a remote station, a remote terminal, a mobile device, a user terminal, a terminal device, a wireless communication device, a user agent or a user apparatus. The access terminal may be a cellular telephone, a cordless telephone, a Session Initiation Protocol (SIP) telephone, an Internet of Things (IoT) device, a satellite handheld terminal, a Wireless Local Loop (WLL) station, a Personal Digital Assistant (PDA), a handheld device with wireless communication functionality, a computing device or other processing device connected to a wireless modem, a vehicle-mounted device, a wearable device, a terminal device in a 5G network or a terminal device in a future evolution network, or the like.

For sidelink communication operating in an unlicensed spectrum, when a terminal has no available Channel Occupancy Time (COT), it needs to access a channel through a Type 1 channel access mechanism, which may consume too much energy for the terminal to perform channel access.

In view of this, the disclosure provides a channel access method and apparatus, a terminal, a chip, and a storage medium. In the method, the first terminal may transmit a first PSFCH to the second terminal, and the first PSFCH is used to instruct the second terminal to access a channel by a specified type of channel access scheme to use reserved resource of the second terminal. In this way, it is possible to improve the possibility that the second terminal accesses the channel by the specified type of channel access scheme, and when the second terminal accesses the channel by the specified type of channel access scheme, the second terminal does not need to perform channel access of the Type 1. Since the energy loss of the channel access process of the Type 1 is high, the method is beneficial to reduce the energy loss of the second terminal performing the channel access.

In order to facilitate understanding of the technical solutions of the embodiments of the disclosure, the technical solutions of the disclosure will be described in detail below with reference to specific examples. As optional solutions, the above related technologies can be arbitrarily combined with the technical solutions of the embodiments of the disclosure, and all combinations thereof belong to the scope of protection of the embodiments of the disclosure. Embodiments of the disclosure include at least some of the following contents.

FIG. 9 is a first schematic flowchart of a channel access method according to an embodiment of the disclosure. As shown in FIG. 9, the method may include the following operation.

In an operation S901, a first terminal transmits a first PSFCH to a second terminal, the first PSFCH being used to instruct the second terminal to access a channel by a specified type of channel access scheme to use reserved resource of the second terminal.

The reserved resource of the second terminal may be, for example, a reserved resource indicated by the second terminal through the SCI. In some embodiments, the reserved resource may be used, for example, for the second terminal to retransmit a current TB, or for the second terminal to initially transmit a new TB (i.e., new transmission).

In the present embodiment, the first terminal may transmit the first PSFCH to the second terminal, and accordingly, the second terminal may receive the first PSFCH from the first terminal. As an example, a manner in which the first terminal transmits the first PSFCH to the second terminal may be, for example, that the first terminal transmits information carried in the first PSFCH to the second terminal through the first PSFCH, or that channel transmission (such as channel transmission of a specific format) may be performed on a time-frequency resource corresponding to the first PSFCH.

Herein, the first PSFCH may be used to instruct the second terminal to access the channel by the specified type of channel access scheme to use reserved resource of the second terminal. In this way, after receiving the first PSFCH, the second terminal can access the channel by the specified type of channel access scheme, thereby using the reserved resource of the second terminal. For example, after the second terminal accesses the channel by the specified type of channel access scheme, the second terminal may use the reserved resource to transmit a sidelink channel (for example, transmit information carried in the sidelink channel).

In some embodiments, the first PSFCH is located in the time domain in: a last PSFCH transmission opportunity prior to the reserved resource; or, a last PSFCH transmission opportunity prior to a first moment. The first moment is prior to a time slot where the reserved resource is located, and a time interval between the first moment and a start moment of the time slot where the reserved resource is located is a sum of a maximum duration of a currently configured extended cyclic prefix and a first duration, the first duration being defined by a standard, configured by a network, or preconfigured, and the first duration may be used by the terminal to receive and process the PSFCH.

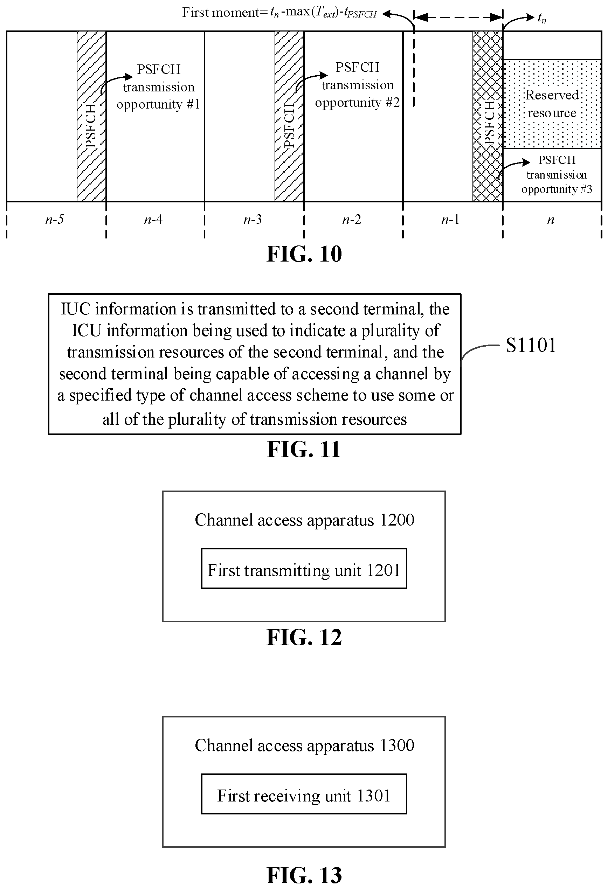

Exemplarily, one PSFCH transmission opportunity in an embodiment of the disclosure refers to one or more consecutive OFDM symbols including PSFCH resources. For example, FIG. 10 shows three PSFCH transmission opportunities, namely, PSFCH transmission opportunity #1, PSFCH transmission opportunity #2, and PSFCH transmission opportunity #3, respectively.

In one example, the first PSFCH is located in the time domain in the last PSFCH transmission opportunity prior to the reserved resource. Taking FIG. 10 as an example, it is assumed that the reserved resource is located intime slot *n*, then the last PSFCH transmission opportunity prior to the reserved resources is a PSFCH transmission opportunity in the time slot *n*-1, that is, the first PSFCH may be located in the PSFCH transmission opportunity #3 within time slot *n*-1 in the time domain. In this case, the first terminal may transmit the first PSFCH to the second terminal in the PSFCH transmission opportunity #3, thereby instructing the second terminal to access the channel by the specified type of channel access scheme to use the reserved resource in the time slot slot *n*.

In another example, the first PSFCH is located in the time domain in: the last PSFCH transmission opportunity prior to the first moment, that is, the last PSFCH transmission opportunity of which an OFDM symbol end point is before the first moment. Herein, the first moment is prior to a time slot where the reserved resource is located, and a time interval between the first moment and a start moment of the time slot where the reserved resource is located is a sum of a maximum duration (the maximum value) of a currently configured extended cyclic prefix and a first duration, the first duration being defined by a standard, configured by a network, or preconfigured. Exemplarily, the first duration may be used, for example, for a terminal, such as a second terminal, to receive and process the PSFCH.

Taking FIG. 10 as an example, it is assumed that the reserved resource is located intime slot *n*, the start moment of the time slot where the reserved resource is located is denoted as *tₙ*, the maximum duration of the currently configured extended cyclic prefix is denoted as *max*(*T*ₑₓₜ), the first duration is denoted *ast_{PSFCH}*, then the first moment can be expressed as *tₙ* - *max*(*T*ₑₓₜ) - *t_{PSFCH}*. As shown in FIG. 10, the last PSFCH transmission opportunity prior to the first moment is a PSFCH transmission opportunity in time slot *n*-3, that is, the first PSFCH may be located in the PSFCH transmission opportunity (i.e., PSFCH transmission opportunity #3) within time slot *n*-3 in the time domain. In this case, the first terminal may transmit the first PSFCH to the second terminal in the PSFCH transmission opportunity #2, thereby instructing the second terminal to access the channel by the specified type of channel access scheme to use the reserved resource in the time slot slot *n*.

According to the above technical solution, the first PSFCH may be located, in the time domain, in the last PSFCH transmission opportunity prior to the first moment, so that it is possible to prevent the second terminal from being unable to determine whether it can access the channel by the specified type of channel access scheme to use the reserved resources, due to insufficient time for decoding the first PSFCH.

In some embodiments, the first PSFCH is located in the frequency domain in: a first Interlaced Resource Block (IRB) in an IRB set; or, a first common IRB and at least one dedicated Physical Resource Block (PRB) in a dedicated PRB set.

In an example, the first PSFCH is located in the frequency domain in: a first IRB in an IRB set.

In some embodiments, IRBs in the IRB set do not overlap with an IRB for transmitting a second PSFCH, where the second PSFCH includes a PSFCH for feeding back HARQ-ACK (i.e., the PSFCH for carrying the HARQ-ACK feedback), and a PSFCH for indicating resource conflict (i.e., the PSFCH for conflict resource indication). That is, the IRBs in the IRB set do not overlap with the IRB of the PSFCH for feeding back HARQ-ACK, and do not overlap with the IRB of the PSFCH for indicating resource conflict.. In some embodiments, the IRB set may be preconfigured, or configured by first signaling that may be transmitted, for example, by a network to the first terminal.

In another example, the first PSFCH is located in the frequency domain in: a first common IRB and at least one (for example, *N*) dedicated PRB in a dedicated PRB set.

In some embodiments, the first common IRB is the same as a common IRB for transmitting the second PSFCH. That is, the first common IRB is the same as a common IRB of the PSFCH for feeding back HARQ-ACK, and is the same as a common IRB of the PSFCH for indicating resource conflict.

In some embodiments, the dedicated PRB set does not overlap with a PRB set for transmitting the second PSFCH. That is, the dedicated PRB set does not overlap with the PRB set of the PSFCH for feeding back HARQ-ACK, and does not overlap with the PRB set of the PSFCH for indicating resource conflict. In some embodiments, the dedicated PRB set may be preconfigured, or configured by second signaling that may be transmitted to the first terminal by the network, for example.

In some embodiments, the first PSFCH is located in the time domain in a plurality of PSFCH transmission opportunities.

Among the plurality of PSFCH transmission opportunities, a time interval between two adjacent PSFCH transmission opportunities is a first time interval, and a last PSFCH transmission opportunity among the plurality of PSFCH transmission opportunities is: a last PSFCH transmission opportunity prior to the reserved resource; or, a last PSFCH transmission opportunity prior to a first moment. The first moment is prior to a time slot where the reserved resource is located, and a time interval between the first moment and a start moment of the time slot where the reserved resource is located is a sum of a maximum duration of a currently configured extended cyclic prefix and a first duration, the first duration being defined by a standard, configured by a network, or preconfigured.

For example, assuming that the first PSFCH is located in the time domain in *M* (*M* is greater than 1) PSFCH transmission opportunities, a time slot where the last PSFCH transmission opportunity among the *M* PSFCH transmission opportunities is located, is for example, a time slot *k*, then time slots where the *M* PSFCH transmission opportunities are located can be expressed as *k* - (*m* - 1) ∗ *P*. Herein, *m* = 1, 2, ... , *M*, where *P* is the first time interval.

For example, in FIG. 10, assuming that *M*= 3 and the first time interval *P* is 2 time slots, in this case if the last PSFCH transmission opportunity among the *M* PSFCH transmission opportunities is the last PSFCH transmission opportunity prior to the reserved resource, that is, the PSFCH transmission opportunity in time slot *n*-1 (i.e., *k*=*n*-1), then the time slots where the *M* PSFCH transmission opportunities are located are respectively time slots *n*-1, *n*-3 and *n*-5. That is, the *M* PSFCH transmission opportunities are respectively the PSFCH transmission opportunity in slot *n*-1 (i.e., PSFCH opportunity #3), the PSFCH transmission opportunity in slot *n*-3 (i.e., PSFCH opportunity #2), and the PSFCH transmission opportunity in slot *n*-5 (i.e., PSFCH opportunity #1). Similarly, if the last PSFCH transmission opportunity among these M transmission opportunities is the last PSFCH transmission opportunity prior to the first moment, that is, the PSFCH opportunity in slot *n*-3 (namely, k = *n*-3), then the time slots where the *M* PSFCH transmission opportunities are located are respectively time slots *n*-3, *n*-5 and *n*-7. That is, the *M* PSFCH transmission opportunities are respectively the PSFCH transmission opportunity in slot *n*-3 (i.e., PSFCH opportunity #2), the PSFCH transmission opportunity in slot *n*-5 (i.e., PSFCH opportunity #1), and the PSFCH transmission opportunity in slot *n*-7 (not shown in FIG. 10).

In some embodiments, the first time interval *P* may be, for example, configured by the network, preconfigured, or predefined (e.g., predefined in a protocol).

According to the above technical solution, the first PSFCH may be located in a plurality of PSFCH transmission opportunities in the time domain, that is, the first terminal may transmit the first PSFCH to the second terminal in a plurality of PSFCH transmission opportunities, thereby facilitating the avoidance of failure of the transmission of the first PSFCH. It can be understood that when the first terminal transmits the first PSFCH to the second terminal in a plurality of PSFCH transmission opportunities, if the second terminal receives the first PSFCH in at least one of the PSFCH transmission opportunities, the second terminal may access the channel by a specified type of channel access scheme to use the reserved resources of the second terminal.

In some embodiments, in a case where the first terminal transmits the first PSFCH to the second terminal in the plurality of PSFCH opportunities, for any one of the plurality of PSFCH transmission opportunities, a first PSFCH on the PSFCH transmission opportunity is located in the frequency domain in: a first IRB in an IRB set corresponding to the PSFCH transmission opportunity; or, a first common IRB corresponding to the PSFCH transmission opportunity, and at least one dedicated PRB in a dedicated PRB set corresponding to the PSFCH transmission opportunity.

In one example, the first PSFCH in the PSFCH transmission opportunity is located in the frequency domain in a first IRB in an IRB set corresponding to the PSFCH transmission opportunity.

In some embodiments, IRBs in the IRB set corresponding to the PSFCH transmission opportunity do not overlap with an IRB for transmitting a second PSFCH, where the second PSFCH includes a PSFCH for feeding back HARQ-ACK, and a PSFCH for indicating resource conflict. That is, the IRBs in the IRB set do not overlap with the IRB of the PSFCH for feeding back HARQ-ACK, and do not overlap with the IRB of the PSFCH for indicating resource conflict. In some embodiments, the IRB set may be preconfigured, or configured by first signaling that may be transmitted, for example, by a network to the first terminal.

In another example, the first PSFCH in the PSFCH transmission opportunity is located in the frequency domain in: a first common IRB corresponding to the PSFCH transmission opportunity, and at least one dedicated PRB in a dedicated PRB set corresponding to the PSFCH transmission opportunity.

In some embodiments, the first common IRB corresponding to the PSFCH transmission opportunity is the same as a common IRB for transmitting the second PSFCH. That is, the first common IRB is the same as a common IRB of the PSFCH for feeding back HARQ-ACK, and is the same as a common IRB occupied by the PSFCH for indicating resource conflict.

In some embodiments, the dedicated PRB set corresponding to the PSFCH transmission opportunity does not overlap with a PRB set for transmitting the second PSFCH. That is, the dedicated PRB set does not overlap with the PRB set of the PSFCH for feeding back HARQ-ACK, and does not overlap with the PRB set of the PSFCH for indicating resource conflict. In some embodiments, the dedicated PRB set may be preconfigured, or configured by second signaling that may be transmitted to the first terminal by the network, for example.

In some embodiments, the method may further include: the second terminal receives first indication information, where the first indication information is used to indicate that resource conflict occurs on the reserved resource of the second terminal. Exemplarily, the first indication information may be, for example, a PSFCH for indicating resource conflict, which is transmitted by the first terminal.

In a possible implementation, in a case where a moment when the second terminal receives the first indication information is earlier than a moment when receiving the first PSFCH, the method may further include: the second terminal accesses the channel by a specified type of channel access scheme to use the reserved resource of the second terminal; in a case where the moment when the second terminal receives the first indication information is later than the moment when receiving the first PSFCH, the method may further include: the second terminal reselects the reserved resource.

It can be understood that if the moment when the second terminal receives the first indication information is earlier than the moment when receiving the first PSFCH, when the second terminal receives the first PSFCH, the resource conflict on the reserved resource may no longer exist, and thus the second terminal may continue to access the channel by the specified type of channel access scheme to use the reserved resource of the second terminal. If the moment when the second terminal receives the first indication information is later than the moment when receiving the first PSFCH, the second terminal needs to reselect the reserved resource to avoid resource conflict.

In another possible implementation, when the second terminal receives the first indication information, the method may further include: the second terminal reselects the reserved resource. That is, regardless of whether the moment when the second terminal receives the first indication information is earlier than the moment when receiving the first PSFCH, the second terminal needs to reselect the reserved resource, so as to minimize the possibility of resource conflict.

In some embodiments, resources (time and frequency resources) occupied by the first PSFCH are the same as resources (time and frequency resources) occupied by a PSFCH for indicating resource conflict, and a sequence cyclic shift of the first PSFCH is different from a sequence cyclic shift of the PSFCH for indicating resource conflict.

That is, the first terminal may transmit the first PSFCH to the second terminal on resources of the PSFCH for indicating resource conflict, and in this case, in order to avoid conflict between the first PSFCH and the PSFCH for indicating resource conflict, it is necessary to satisfy that the sequence cyclic shift of the first PSFCH is not equal to the sequence cyclic shift of the PSFCH for indicating resource conflict. For example, since the sequence cyclic shift of the PSFCH for indicating resource conflict is 0 at present, the sequence cyclic shift of the first PSFCH should not be equal to 0 in this case. In some embodiments, the sequence cyclic shift of the first PSFCH may be equal to 6.

In some embodiments, the step of transmitting the first PSFCH by the first terminal to the second terminal includes: transmitting the first PSFCH by the first terminal to the second terminal when the first terminal satisfies a first condition. That is, the prerequisite for the first terminal to transmit the first PSFCH to the second terminal is that the first condition is met.

Exemplarily, the first condition may include, for example, at least one of the following conditions A to F.

In condition A, a moment when the first terminal generates Channel Occupancy Time (COT) is prior to a PSFCH transmission opportunity where the first PSFCH is located, and a duration of the COT includes a time slot where the reserved resource is located.

In condition B, a value of a Channel Access Priority Class (CAPC) used by the first terminal to generate the COT is greater than or equal to a first value.

In one example, the value of the CAPC used by the first terminal to generate the COT is equal to the first value. Exemplarily, the first value may be 4, for example, in this case, the second terminal sharing the COT performs channel access (or LBT) for a relatively long time and consumes a lot of energy, thus in this case, the first terminal may instruct, through the first PSFCH, the second terminal to access the channel through a specified type of channel access scheme, so as to reduce the energy consumption for performing the channel access (or LBT) by the second terminal.

In another example, the value of the CAPC used by the first terminal to generate the COT is greater than the first value. In this case, the first value may be indicated by, for example, the second terminal. For example, when indicating the reserved resource, the second terminal may indicate the first value through an SCI or a Media Access Control (MAC) Control Element (MAC CE), and the first value may be, for example, a CAPC for the data that the second terminal will transmit on the reserved resource.

In condition C, the first terminal is a destination receiving terminal to which the second terminal will send data on the reserved resource.

In condition D, a destination identifier indicated in SCI for indicating the reserved resource is an identifier of the first terminal.

In condition E, a unicast connection exists between the first terminal and the second terminal.

In condition F, at the PSFCH transmission opportunity where the first PSFCH is located, the second terminal does not satisfy a condition for indicating resource conflict to the first terminal. It can be understood that if the first terminal indicates resource conflict to the second terminal at the PSFCH transmission opportunity where the first PSFCH is located, the second terminal needs to perform resource reselection and cannot use the reserved resource of the second terminal. Therefore, the second terminal may transmit the first PSFCH when the condition F is satisfied, thereby instructing the second terminal to access the channel by a specified type of channel access scheme to use the reserved resource of the second terminal.

In some embodiments, resources occupied by the first PSFCH are associated with the reserved resource of the second terminal. That is, the first terminal may transmit the first PSFCH to the first terminal on the PSFCH resources associated with the reserved resource, thereby instructing the second terminal to access the channel by the specified type of channel access scheme to use the reserved resource of the second terminal.

In some embodiments, the resources occupied by the first PSFCH are associated with the PSSCH transmitted by the second terminal to the first terminal, and the reserved resource of the second terminal is used for retransmission of the PSSCH. That is, the first terminal may transmit the first PSFCH to the first terminal on the PSFCH resources associated with the PSSCH, thereby instructing the second terminal to access the channel by the specified type of channel access scheme to retransmit the PSSCH using the reserved resource of the second terminal.

For example, when the first terminal does not decode the PSSCH successfully and the first terminal satisfies the first condition, the first terminal may transmit the first PSFCH to the second terminal. In this case, the first PSFCH may be used to instruct the second terminal to access the channel by the specified type of channel access scheme to use reserved resource of the second terminal, and may be used to further indicate the NACK. For example, if the first terminal does not decode the PSSCH successfully and the first terminal satisfies the first condition, the first terminal may transmit a PSFCH with a sequence cyclic shift of 0 (first PSFCH) to the second terminal on the PSFCH resource associated with the PSSCH, that is, indicating NACK, and the PSFCH with a sequence cyclic shift of 0 may also be used to instruct the second terminal to access the channel by the specified type of channel access scheme to use the reserved resources of the second terminal.

In some embodiments, when the first terminal successfully decodes the PSSCH, the first terminal may transmit a PSFCH with a sequence cyclic shift of 6 to the second terminal on the PSFCH resource associated with the PSSCH, that is, indicating an ACK. In this case, the second terminal may not need to retransmit the PSSCH using the reserved resource.

In some embodiments, when the first terminal does not decode the PSSCH successfully and the first terminal does not satisfy the first condition, the first terminal may not transmit the PSFCH on the PSFCH resource associated with the PSSCH. In this case, the second terminal cannot access the channel by the specified type of channel access scheme to use the reserved resource of the second terminal.

In some embodiments, when the second terminal accesses the channel by the specified type of channel access scheme to use the reserved resource of the second terminal, the reserved resource may be used by the second terminal to transmit a sidelink channel, wherein a destination identifier of the sidelink channel includes an identifier of the first terminal, and the identifier of the first terminal is the same as a destination identifier indicated in SCI for indicating the reserved resource.

For example, after receiving the first PSFCH from the first terminal, the second terminal may access the channel by the specified type of channel access scheme, and transmit the sidelink channel using the reserved resources of the second terminal. Herein, the destination identifier of the sidelink channel includes at least a destination identifier indicated in an SCI for indicating the reserved resource, and the destination identifier is an identifier of the first terminal.

In some embodiments, the specified type is Type 2. In this case, the first PSFCH may be used to instruct the second terminal to access the channel by the Type 2 channel access scheme to use reserved resource of the second terminal. In this way, it is possible to improve the possibility that the second terminal accesses the channel by the Type 2 channel access scheme, and when the second terminal accesses the channel by the Type 2 channel access scheme, the second terminal does not need to perform the Type 1 channel access. Since the energy loss of the channel access process of the Type 2 is lower than the energy loss of the channel access process of the Type 1, the method is beneficial to reduce the energy loss of the second terminal performing the channel access.

FIG. 11 is a second schematic flowchart of a channel access method according to an embodiment of the disclosure. As shown in FIG. 10, the method may include the following operation.

In an operation S1101, a first terminal transmits Inter-User equipment Coordination (IUC) information to a second terminal, the ICU information being used to indicate a plurality of transmission resources of the second terminal, and the second terminal being capable of accessing a channel by a specified type of channel access scheme to use some or all of the plurality of transmission resources.

In the present embodiment, the first terminal may transmit IUC information to the second terminal, accordingly, the second terminal may receive IUC information from the first terminal, the ICU information may be used to indicate a plurality of transmission resources of the second terminal, and the second terminal may access a channel by a specified type of channel access scheme to use some or all of the plurality of transmission resources.

In some embodiments, the IUC information is carried in a second-stage SCI (e.g., SCI format 2-C). In this case, for any one of the plurality of transmission resources, when a time interval between a time slot where the transmission resource is located and a time slot where the second-stage SCI is located is smaller than a second time interval, the second terminal is capable of accessing the channel by the specified type of channel access scheme to use the transmission resource.

Exemplarily, the second time interval may be, for example, the maximum number of time slots included in the remaining time of a COT generated by the first terminal, and the first terminal may share the COT with the second terminal. For example, assuming that the second time interval is denoted as *Z*, then *Z* can be determined by: *Z* = 8·2^{µ} - 2, or *Z* = 10·2^{µ} - 2. Herein, 8 or 10 denotes the maximum possible duration in ms of the generated COT, µ represents the subcarrier spacing index of the current carrier, and 2 represents a total number of time slots occupied by the second-stage SCI (SCI format 2-C) and one transmission resource. According to the method of the present embodiment, for any one of the plurality of transmission resources, if the time interval between the time slot where the transmission resource is located and the time slot where the second-stage SCI is located is less than the second time interval *Z,* it indicates that the transmission resource is within the COT generated by the first terminal, thus the first terminal can access the channel by the specified type of channel access scheme to use the transmission resource.

In some embodiments, the ICU information includes a plurality of TRIVs, and each TRIV is used to indicate transmission resources of the second terminal on a plurality of time slots. For example, the ICU information may include a plurality (e.g., two) of {TRIV, FRIV, reservation period} combinations, each of which includes one TRIV, and the TRIV may indicate transmission resources of the second terminal on the plurality of time slots. In this case, the second terminal can access the channel by the specified type of channel access scheme to use a first transmission resource and a transmission resource prior to a time slot where the first transmission resource is located. Herein, the first transmission resource is: a transmission resource on a last time slot indicated by a last TRIV of the plurality of TRIVs; or a transmission resource on a last slot indicated by a first TRIV of the plurality of TRIVs.

In an example, the first transmission resource is a transmission resource on a last time slot indicated by a last TRIV of the plurality of TRIVs. For example, if the ICU information includes two {TRIV, FRIV, reservation period} combinations, the last TRIV among the plurality of TRIVs is the TRIV in the second {TRIV, FRIV, reservation period} combination (for example, denoted as the first TRIV). In this case, the second terminal can access the channel by the specified type of channel access scheme to use the transmission resource on the last time slot indicated by the first TRIV, and the transmission resource(s) before the last time slot.

In another example, the first transmission resource is a transmission resource on a last slot indicated by a first TRIV of the plurality of TRIVs. For example, if the ICU information includes two {TRIV, FRIV, reservation period} combinations, the first TRIV among the plurality of TRIVs is the TRIV in the first {TRIV, FRIV, reservation period} combination (for example, denoted as the second TRIV). In this case, the second terminal can access the channel by the specified type of channel access scheme to use the transmission resource on the last time slot indicated by the second TRIV, and the transmission resource(s) before the last time slot.

In some embodiments, the first transmission resource and the transmission resource prior to the time slot where the first transmission resource is located are included in a COT generated by the first terminal. For example, when the first terminal transmits ICU information to the second terminal, it is necessary to ensure that the first transmission resource indicated by the ICU information and the transmission resource before the time slot where the first transmission resource is located are all included in the COT generated by the first terminal, so that after receiving the ICU information, the second terminal can access the channel by the specified type of channel access scheme to use the first transmission resource and the transmission resource before the time slot where the first transmission resource is located.

In some embodiments, the IUC information is carried in an MAC CE. In this case, the MAC CE includes second indication information for indicating that the second terminal is capable of accessing the channel by the specified type of channel access scheme to use some or all of the plurality of transmission resources.

For example, when the first terminal transmits IUC information to the second terminal through the MAC CE, a specific field may be added to the MAC CE to indicate that the second terminal can access the channel through the specified type of channel access scheme to use some or all of the plurality of transmission resources indicated by the IUC information. For example, the specific field may indicate that the second terminal may access the channel by the specified type of channel access scheme to use the second transmission resource(s) indicated by the IUC information, and the second transmission resource(s) may be part or all of the transmission resources indicated by the IUC information.

According to the method of the present embodiment, the first terminal can transmit the IUC information to the second terminal, and the second terminal can access the channel by the specified type of channel access scheme to use part or all of the plurality of transmission resources indicated by the IUC information. In this way, it is possible to improve the possibility that the second terminal accesses the channel by the specified type of channel access scheme, and when the second terminal accesses the channel by the specified type of channel access scheme, the second terminal does not need to perform channel access of the Type 1. Since the energy loss of the channel access process of the Type 1 is high, the method is beneficial to reduce the energy loss of the second terminal performing the channel access.

In some embodiments, the specified type is Type 2. When the second terminal accesses the channel by the Type 2 channel access scheme, the second terminal does not need to perform the Type 1 channel access. Since the energy loss of the channel access process of the Type 2 is lower than the energy loss of the channel access process of the Type 1, the method is beneficial to reduce the energy loss of the second terminal performing the channel access.

The channel access methods provided by the embodiments of the disclosure have been described above, and in order to facilitate understanding of the embodiments of the disclosure, possible implementations of the channel access methods applicable to the embodiments of the disclosure are described below by taking the specified type being Type 2 as an example. For brevity, in the following examples, the first terminal is denoted as terminal #1, and the second terminal is denoted as terminal #2.

### First solution

In the first solution, the reserved resource of the terminal #2 is associated with a dedicated PSFCH resource, and the terminal #1 may indicate, on the PSFCH resource, whether the terminal #2 can access the channel by the Type 2 scheme (Type 2 channel access scheme) to use the reserved resource.

In other words, the terminal #1 may indicate, on the PSFCH resource corresponding to (associated with) the reserved resource of the terminal #2, whether the terminal #2 can access the channel by the Type 2 scheme to use the subsequent reserved resource. For example, the terminal #1 may transmit the PSFCH (i.e., the first PSFCH in the foregoing embodiment) to the terminal #2 on the PSFCH resource, and the PSFCH can be used to indicate that the terminal #2 can access the channel by the Type 2 scheme to use the reserved resource of the terminal #2.

As an example, the PSFCH may occupy in the frequency domain: an IRB (such as a dedicated IRB). Herein, the IRB set that may be used to transmit the PSFCH may be, for example, configured by separate signaling, or preconfigured. In some embodiments, the IRBs in the IRB set do not overlap with IRB(s) for PSFCHs for carrying the HARQ-ACK feedback and the conflict resource indication.

As another example, the PSFCH may occupy in the frequency domain: a common IRB and *N* dedicated PRBs. In some embodiments, the common IRB for transmitting the PSFCH is the same as the common IRB for the PSFCHs carrying the HARQ-ACK feedback and the conflict resource indication. A PRB set (dedicated PRB set) to which the *N* dedicated PRBs belong may be configured by separate signaling, or preconfigured, for example. In some embodiments, the IRB set does not overlap with a PRB set for PSFCHs for carrying the HARQ-ACK feedback and the conflict resource indication.

As an example, for the reserved resource on a time slot *n*, a preferred transmission opportunity where a PSFCH (the first PSFCH), corresponding to the reserved resource, for indicating the Type 2 channel access scheme is located may be: the PSFCH transmission opportunity in the time slot *m*. Herein, the time slot *m* Satisfies: the time slot *m* is the last time slot where a PSFCH resources exists, prior to the time slot *n*. For example, in FIG. 10, the preferred transmission opportunity where the PSFCH is located is the PSFCH transmission opportunity (i.e. PSFCH transmission opportunity #3) in the time slot *n*-1.

As another example, for the reserved resource on a time slot *n*, a preferred transmission opportunity where a PSFCH (the first PSFCH), corresponding to the reserved resource, for indicating the Type 2 channel access scheme is located may be: the last PSFCH transmission opportunity of which an OFDM symbol end point is before *tₙ* - *max*(*T*ₑₓₜ) - *t_{PSFCH}*. Herein, *tₙ* represents a start moment of the time slot *n*; *max*(*T*ₑₓₜ) represents the maximum value of the currently configured extended cyclic prefix; *t_{PSFCH}* represents a time interval (that is, the first time period in the foregoing embodiment), where the time interval can be used for the terminal to receive and process the PSFCH, the value of the time interval can be configured by a network, preconfigured, or defined by a protocol, for example. For example, in FIG. 10, the preferred transmission opportunity where the PSFCH is located is the PSFCH transmission opportunity (i.e. PSFCH transmission opportunity #2) in the time slot *n*-3.

It is to be noted that one PSFCH transmission opportunity refers to one or more consecutive OFDM symbols including PSFCH resources. For example, FIG. 10 shows three PSFCH transmission opportunities, namely, PSFCH transmission opportunity #1, PSFCH transmission opportunity #2, and PSFCH transmission opportunity #3, respectively.

In some embodiments, each reserved resource of the terminal #2 may be associated (corresponding to) *M* PSFCH transmission opportunity for indicating the Type 2 channel access scheme.In this case, the terminal #1 may transmit the PSFCH to the terminal #2 on the *M*PSFCH transmission opportunities, so as to indicate that the terminal #2 can access the channel by the Type 2 scheme to use the reserved resource.

Exemplarily, assuming that a time slot where the preferred PSFCH transmission opportunity is located is *k*, then time slots where the *M* transmission opportunities are located are *k* - (*m* - 1) ∗ *P*. Herein, *P* is the time interval between adjacent PSFCH transmission opportunities, the value of which may be configured by a network, preconfigured, or defined by a protocol, for example. Herein, *m* = 1, 2, ... , *M*. For example, in FIG. 10, assuming that the time slot where the preferred PSFCH transmission opportunity is located is *n*-1, then the reserved resources on slot *n* can, for example, be associated with three PSFCH transmission opportunities for indicating Type 2 channel access scheme, namely PSFCH transmission opportunity #1, PSFCH transmission opportunity #2, and PSFCH transmission opportunity #3. Herein, the time interval *P* between adjacent PSFCH transmission opportunities is 2 slots.

In some embodiments, if the terminal #2 receives the PSFCH indicating the Type 2 channel access scheme, the terminal #2 may access the channel by the Type 2 scheme, and then transmit a sidelink channel on the reserved resource corresponding to the PSFCH. A destination identifier (ID) of the sidelink channel should include at least a destination ID indicated in the SCI for indicating the reserved resource.

In some embodiments, for a specific reserved resource of the terminal #2, if the terminal #2 receives both resource conflict indication (used to indicate that resource conflict has occurred on the reserved resource) and Type 2 channel access indication (such as receiving a PSFCH used to indicate the Type 2 channel access scheme), the terminal #2 may perform the following scheme of a manner or a manner 2.

In the manner 1, if a moment when the terminal #2 receives the Type 2 channel access indication is later than a moment when the terminal #2 receives the resource conflict indication, in this case, the resource conflict may no longer exist, so the terminal #2 may continue to use the reserved resource through the Type 2 channel access. Otherwise, the terminal #2 should reselect the reserved resource.

In the manner 2, the terminal #2 should reselect the reserved resource to minimize the possibility of resource conflict.

In some embodiments, when the terminal #1 satisfies at least one of the following conditions a) to e) (corresponding to the first condition in the foregoing embodiment), the terminal #1 may indicate, on a certain PSFCH transmission opportunity, whether the terminal #2 can access the channel in by the Type 2 scheme to use the reserved resource associated with the PSFCH transmission opportunity.
a) At or before the PSFCH transmission opportunity, the duration of the COT generated by the terminal #1 includes the time slot where the reserved resource is located.
b) The CAPC value used by the terminal #1 to generate the COT is 4, or is greater than the CAPC value Y. Herein, the value of Y may be indicated by, for example, the terminal #2; for example, the terminal #2 may indicate the value of Y through SCI or MAC CE when indicating the reserved resource, and Y may be a CAPC for the data that the terminal #2 will transmit on the reserved resource.
c) the terminal #1 is a destination receiving terminal to which the terminal #2 will transmit data on the reserved resource, or a destination ID indicated in the SCI indicating the reserved resource corresponds to the terminal #1 (or the destination ID is the ID of the terminal #1).
d) There is a unicast connection between the terminal #1 and the terminal #2.
e) At the PSFCH transmission opportunity, the terminal #1 does not satisfy the condition of sending resource conflict indication (conflict information) to the terminal #2.

### Second solution

In the second solution, the terminal #1 may indicate, on the PSFCH resource used to indicate resource conflict or HARQ-ACK feedback, to the terminal #2 whether or not the channel can be accessed by the Type 2 scheme to use the reserved resource of the terminal #2.

In the first possible manner, the terminal #1 may indicate, on the PSFCH resource corresponding to the reserved resource of the terminal #2, whether or not the terminal #2 can access the channel by the Type 2 scheme to use the reserved resource. For example, the terminal #1 may transmit the PSFCH (i.e., the first PSFCH in the foregoing embodiment) to the terminal #2 on the PSFCH resource, and the PSFCH can be used to indicate that the terminal #2 can access the channel by the Type 2 scheme to use the reserved resource.

In some embodiments, the PSFCH time-frequency resources occupied by the PSFCH are the same as the time-frequency resources occupied by the PSFCH used for resource conflict indication, but the sequence cyclic shift of the PSFCH used to indicate the Type 2 channel access scheme should not be equal to 0, and in some embodiments, the sequence cyclic shift may be equal to 6.

In some embodiments, when the terminal #2 does not transmit the PSFCH indicating the Type 2 channel access scheme to the terminal #2 on the PSFCH resource, the terminal #2 may transmit the PSFCH indicating the resource conflict to the terminal #2 on the PSFCH resource to indicate that there is resource conflict on the reserved resource.

In the second possible manner, the terminal #1 may indicate, on the PSFCH resource for HARQ-ACK feedback corresponding to the PSSCH currently transmitted by the terminal #2, whether the terminal #2 can access the channel by the Type 2 scheme to use the next reserved resource, and the reserved resource can be used for retransmission of the PSSCH. For this manner:

In one possible case, if the terminal #1 successfully decodes the current PSSCH, it may transmit a PSFCH with a sequence cyclic shift of 6, that is, an ACK, on the PSFCH resource. In this case, the terminal #2 may not need to use the next reserved resource for retransmission of the PSSCH.

In another possible case, if the terminal #1 does not decode the current PSSCH successfully, and the terminal #1 satisfies the condition (the condition may be, for example, at least one of the above conditions a) to e)) of indicating to the terminal #2 that for the next reserved resource, the channel can be accessed by the Type 2 scheme, the terminal #1 may transmit a PSFCH with a sequence cyclic shift of 0 on the PSFCH resource, that is, indicating NACK, and the channel can be accessed by the Type 2 scheme for the next reserved resource. In this case, after receiving the PSFCH with the sequence cyclic shift of 0, the terminal #2 may access the channel by the Type 2 scheme to retransmit the PSSCH using the reserved resource.

In another possible case, if the terminal #1 does not decode the current PSSCH successfully, and the terminal #1 does not satisfy the condition of indicating to the terminal #2 that the channel can be accessed by the Type 2 scheme for the next reserved resource, the terminal #1 should not transmit the PSFCH on the PSFCH resource.

### Third solution

In the third solution, the terminal #1 may indicate, through the IUC information, a set of resources suitable for use by the terminal #2. The terminal #2 may access the channel by the Type 2 scheme to use some or all of the resources in the set of resources.

In a first possible manner, the IUC information may be carried in SCI format 2-C (or simply SCI 2-C). The terminal #1 may transmit, through the SCI format 2-C, a set of resources suitable for use by the terminal #2 to the terminal #2, the SCI format 2-C may include two {TRIV, FRIV, reservation period} combinations, where for part or all of the resources indicated in at least one combination, the channel may be accessed by the Type 2 scheme, or in other words, the terminal #2 may access the channel by the Type 2 scheme, thereby using part or all of the resources indicated in the at least one combination.

As an example, for any resource indicated by each {TRIV, FRIV, reservation period} combination in the SCI format 2-C, if the interval between the resource and the slot where the SCI format 2-C is located is less than *Z*, the terminal #2 can access the channel by the Type 2 scheme to use the resource.

Here, Z represents the maximum value of slots included in the remaining time of the COT shared by the terminal #1. For example, *Z* = 8·2^{µ} - 2 or *Z* = 10·2^{µ} - 2, 8 or 10 denotes the maximum possible duration in ms of the generated COT, µ represents the subcarrier spacing index of the current carrier, and 2 represents a total number of time slots occupied by the SCI format 2-C and the resource.

As another example, among the resources indicated by the {TRIV, FRIV, reservation period} combinations included in the SCI format 2-C, for resource(s) on the last time slot indicated by the last TRIV and resource(s) prior to the last time slot, the channel can be accessed by the Type 2 scheme. In some embodiments, the terminal #1 should ensure that the resource(s) on the last time slot and the resource(s) prior to the last time slot are included in the COT generated by the terminal #1.

As yet another example, for resources on the last time slot indicated by the TRIV of the first {TRIV, FRIV, reservation period} combination included in the SCI format 2-C and resources prior to the last time slot, the channel can be accessed by the Type 2 scheme. In some embodiments, the terminal #1 should ensure that the resource(s) on the last time slot and the resource(s) prior to the last time slot are included in the COT generated by the terminal #1.

In a second possible manner, the IUC information may be carried in the MAC CE. When the terminal #1 transmits the IUC information to the terminal #2 through the MAC CE, a specific field may be added to the MAC CE to indicate whether the terminal #2 can access the channel by the Type 2 scheme to use some or all of the resources indicated by the IUC information. For example, the specific field may indicate that the terminal #2 may access the channel by the Type 2 scheme to use the second transmission resource(s) indicated by the IUC information, and the second transmission resource(s) may be part or all of the resources indicated by the IUC information.

According to the above first to third solutions, the terminal #1 may instruct, through the PSFCH, the terminal #2 to access the channel by the Type 2 scheme to use the subsequent reserved resource; or, the terminal #1 may simultaneously indicate (indirectly or directly) whether the terminal #2 can use part or all of the resources indicated by the IUC information by the Type 2 channel access scheme, while transmitting the IUC information to the terminal #2. In this way, it is possible to increase the possibility that the terminal #2 accesses the channel by the Type 2 channel access scheme, and reduce the energy loss of the terminal #2 in performing the LBT.

The preferred embodiments of the disclosure have been described in detail above with reference to the accompanying drawings, but the disclosure is not limited to the specific details in the above-described embodiments. Within the scope of the technical concept of the disclosure, various simple modifications can be made to the technical solutions of the disclosure, and these simple modifications all fall within the scope of protection of the disclosure. For example, various specific technical features described in the above-described detailed description can be combined in any suitable manner without contradiction, and various possible combinations will not be described separately in the disclosure in order to avoid unnecessary repetition. For example, various embodiments of the disclosure may be combined arbitrarily, and as long as they do not violate the idea of the disclosure, they should also be regarded as the disclosure of the disclosure. For another example, on the premise that there is no conflict, each embodiment described in the disclosure and/or the technical features in each embodiment can be arbitrarily combined with the prior art, and the technical solution obtained after the combination should also fall within the scope of protection of the disclosure.

It should be further understood that in various method embodiments of the disclosure, sizes of serial numbers of the above processes do not mean a sequence of execution, and the sequence of execution of each process should be determined by its function and internal logic, and should not constitute any limitation on implementation processes of the embodiments of the disclosure. In addition, in the embodiments of the disclosure, the terms "downlink", "uplink" and "sidelink" are used to indicate the transmission direction of signals or data. Herein, "downlink" is used to indicate that the transmission direction of signals or data is a first direction transmitted from a station to a UE of the cell, "uplink" is used to indicate that the transmission direction of signals or data is a second direction transmitted from the UE of the cell to the station, and "sidelink" is used to indicate that the transmission direction of signals or data is a third direction transmitted from UE 1 to UE 2. For example, "downlink signal" indicates that the transmission direction of the signal is the first direction. In addition, in the embodiments of the disclosure, the term "and/or" is merely an association relationship describing associated objects, indicating that there may be three kinds of relationships. Specifically, A and/or B may represent three cases in which A is present alone, A and B are present at the same time, and B is present alone. In addition, the character "/" in the disclosure generally indicates that the relationship between the related objects is "or".

Based on the foregoing embodiments, embodiments of the disclosure provide corresponding channel access apparatuses.

FIG. 12 is a first schematic structural diagram of a channel access apparatus provided by an embodiment of the disclosure, which is applied to a first terminal. As shown in FIG. 12, the channel access apparatus 1200 (hereinafter simply referred to as apparatus 1200) includes a first transmitting unit 1201.

The first transmitting unit 1201 is configured to transmit a first Physical Sidelink Feedback Channel (PSFCH) to a second terminal, the first PSFCH being used to instruct the second terminal to access a channel by a specified type of channel access scheme to use a reserved resource of the second terminal.

In some embodiments, the first PSFCH is located in the time domain in: a last PSFCH transmission opportunity prior to the reserved resource; or, a last PSFCH transmission opportunity prior to a first moment. The first moment is prior to a time slot where the reserved resource is located, and a time interval between the first moment and a start moment of the time slot where the reserved resource is located is a sum of a maximum duration of a currently configured extended cyclic prefix and a first duration, the first duration being defined by a standard, configured by a network, or preconfigured.

In some embodiments, the first PSFCH is located in the frequency domain in: a first Interlaced Resource Block (IRB) in an IRB set; or, a first common IRB and at least one dedicated Physical Resource Block (PRB) in a dedicated PRB set.

In some embodiments, the first PSFCH is located in the time domain in: a plurality of PSFCH transmission opportunities. Among the plurality of PSFCH transmission opportunities, a time interval between two adjacent PSFCH transmission opportunities is a first time interval, and a last PSFCH transmission opportunity among the plurality of PSFCH transmission opportunities is: a last PSFCH transmission opportunity prior to the reserved resource; or, a last PSFCH transmission opportunity prior to a first moment. The first moment is prior to a time slot where the reserved resource is located, and a time interval between the first moment and a start moment of the time slot where the reserved resource is located is a sum of a maximum duration of a currently configured extended cyclic prefix and a first duration, the first duration being defined by a standard, configured by a network, or preconfigured.

In some embodiments, the first time interval is configured by the network, preconfigured, or predefined.

In some embodiments, for any one of the plurality of PSFCH transmission opportunities, a first PSFCH on the PSFCH transmission opportunity is located in the frequency domain in: a first IRB in an IRB set corresponding to the PSFCH transmission opportunity; or, a first common IRB corresponding to the PSFCH transmission opportunity, and at least one dedicated PRB in a dedicated PRB set corresponding to the PSFCH transmission opportunity.

In some embodiments, IRBs in the IRB set do not overlap with an IRB for transmitting a second PSFCH; the dedicated PRB set does not overlap with a PRB set for transmitting the second PSFCH; and the first common IRB is the same as a common IRB for transmitting the second PSFCH. Herein, the second PSFCH includes a PSFCH for feeding back Hybrid Automatic Repeat reQuest-Acknowledgment (HARQ-ACK), and a PSFCH for indicating resource conflict.

In some embodiments, the IRB set is preconfigured, or configured by first signaling; and the dedicated PRB set is preconfigured, or configured by second signaling.

In some embodiments, resources occupied by the first PSFCH are the same as resources occupied by a PSFCH for indicating resource conflict, and a sequence cyclic shift of the first PSFCH is different from a sequence cyclic shift of the PSFCH for indicating resource conflict.

In some embodiments, the first transmitting unit 1201 is specifically configured to transmit the first PSFCH to the second terminal when the apparatus 1200 satisfies a first condition.

In some embodiments, resources occupied by the first PSFCH are associated with the reserved resource.

In some embodiments, resources occupied by the first PSFCH are associated with a Physical Sidelink Shared Channel (PSSCH) from the second terminal, and the reserved resource is used for retransmission of the PSSCH.

In some embodiments, the first transmitting unit 1201 is specifically configured to transmit the first PSFCH to the second terminal when the apparatus 1200 does not decode the PSSCH successfully and the apparatus 1200 satisfies a first condition, the first PSFCH being further used to indicate Negative Acknowledgement (NACK).

In some embodiments, the first condition includes at least one of: a moment when the the apparatus 1200 generates Channel Occupancy Time (COT) is prior to a PSFCH transmission opportunity where the first PSFCH is located, and a duration of the COT includes a time slot where the reserved resource is located; a value of a Channel Access Priority Class (CAPC) used by the apparatus 1200 to generate the COT is greater than or equal to a first value; the apparatus 1200 is a destination receiving terminal to which the second terminal will send data on the reserved resource; a destination identifier indicated in Sidelink Control Information (SCI) for indicating the reserved resource is an identifier of the apparatus 1200; a unicast connection exists between the apparatus 1200 and the second terminal; or at the PSFCH transmission opportunity where the first PSFCH is located, the apparatus 1200 does not satisfy a condition for indicating resource conflict to the second terminal.

In some embodiments, when the second terminal accesses the channel by the specified type of channel access scheme to use the reserved resource of the second terminal, the reserved resource is used by the second terminal to transmit a sidelink channel, wherein a destination identifier of the sidelink channel includes an identifier of the apparatus 1200, and the identifier of the apparatus 1200 is the same as a destination identifier indicated in SCI for indicating the reserved resource.

In some embodiments, the specified type is Type 2.

FIG. 13 is a second schematic structural diagram of a channel access apparatus provided by an embodiment of the disclosure, which is applied to a second terminal. As shown in FIG. 13, the channel access apparatus 1300 (hereinafter simply referred to as apparatus 1300) includes a first receiving unit 1301.

The first receiving unit 1301 is configured to receive a first Physical Sidelink Feedback Channel (PSFCH) from a first terminal, the first PSFCH being used to instruct the apparatus 1300 to access a channel by a specified type of channel access scheme to use a reserved resource of the apparatus 1300.

In some embodiments, the first PSFCH is located in the time domain in: a last PSFCH transmission opportunity prior to the reserved resource; or, a last PSFCH transmission opportunity prior to a first moment. The first moment is prior to a time slot where the reserved resource is located, and a time interval between the first moment and a start moment of the time slot where the reserved resource is located is a sum of a maximum duration of a currently configured extended cyclic prefix and a first duration, the first duration being defined by a standard, configured by a network, or preconfigured.

In some embodiments, the first PSFCH is located in the frequency domain in: a first Interlaced Resource Block (IRB) in an IRB set; or, a first common IRB and at least one dedicated Physical Resource Block (PRB) in a dedicated PRB set.

In some embodiments, the first PSFCH is located in the time domain in: a plurality of PSFCH transmission opportunities. Among the plurality of PSFCH transmission opportunities, a time interval between two adjacent PSFCH transmission opportunities is a first time interval, and a last PSFCH transmission opportunity among the plurality of PSFCH transmission opportunities is: a last PSFCH transmission opportunity prior to the reserved resource; or, a last PSFCH transmission opportunity prior to a first moment. The first moment is prior to a time slot where the reserved resource is located, and a time interval between the first moment and a start moment of the time slot where the reserved resource is located is a sum of a maximum duration of a currently configured extended cyclic prefix and a first duration, the first duration being defined by a standard, configured by a network, or preconfigured.

In some embodiments, the first time interval is configured by the network, preconfigured, or predefined.

In some embodiments, for any one of the plurality of PSFCH transmission opportunities, a first PSFCH on the PSFCH transmission opportunity is located in the frequency domain in: a first IRB in an IRB set corresponding to the PSFCH transmission opportunity; or, a first common IRB corresponding to the PSFCH transmission opportunity, and at least one dedicated PRB in a dedicated PRB set corresponding to the PSFCH transmission opportunity.

In some embodiments, IRBs in the IRB set do not overlap with an IRB for transmitting a second PSFCH; the dedicated PRB set does not overlap with a PRB set for transmitting the second PSFCH; and the first common IRB is the same as a common IRB for transmitting the second PSFCH. Herein, the second PSFCH includes a PSFCH for feeding back Hybrid Automatic Repeat reQuest-Acknowledgment (HARQ-ACK), and a PSFCH for indicating resource conflict.

In some embodiments, the IRB set is preconfigured, or configured by first signaling; and the dedicated PRB set is preconfigured, or configured by second signaling.

In some embodiments, the apparatus 1300 further includes a second receiving unit configured to receive first indication information used to indicate that resource conflict occurs on the reserved resource.

In some embodiments, the apparatus 1300 further includes a channel access unit configured to: in a case where a moment when the first indication information is received is earlier than a moment when the first PSFCH is received, access the channel by the specified type of channel access scheme to use the reserved resource of the second terminal; in a case where the moment when the first indication information is received is later than the moment when the first PSFCH is received, reselect the reserved resource.

In some embodiments, the apparatus 1300 further includes a second reselecting unit configured to reselect the reserved resource.

In some embodiments, resources occupied by the first PSFCH are the same as resources occupied by a PSFCH for indicating resource conflict, and a sequence cyclic shift of the first PSFCH is different from a sequence cyclic shift of the PSFCH for indicating resource conflict.

In some embodiments, resources occupied by the first PSFCH are associated with the reserved resource.

In some embodiments, resources occupied by the first PSFCH are associated with a Physical Sidelink Shared Channel (PSSCH) transmitted by the apparatus 1300, and the reserved resource is used for retransmission of the PSSCH.

In some embodiments, the first PSFCH is further used to indicate Negative Acknowledgement (NACK).

In some embodiments, when the apparatus 1300 accesses the channel by the specified type of channel access scheme to use the reserved resource of the apparatus 1300, the reserved resource is used by the apparatus 1300 to transmit a sidelink channel, wherein a destination identifier of the sidelink channel includes an identifier of the first terminal, and the identifier of the first terminal is the same as a destination identifier indicated in SCI for indicating the reserved resource.

In some embodiments, the specified type is Type 2.

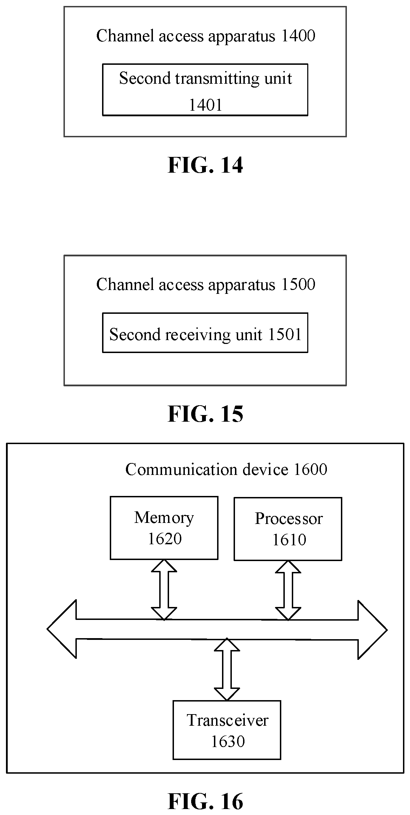

FIG. 14 is a third schematic structural diagram of a channel access apparatus provided by an embodiment of the disclosure, which is applied to a first terminal. As shown in FIG. 14, the channel access apparatus 1400 (hereinafter simply referred to as apparatus 1400) includes a second transmitting unit 1401.

The second transmitting unit 1401 is configured to transmit Inter-User equipment Coordination (IUC) information to a second terminal, the ICU information being used to indicate a plurality of transmission resources of the second terminal, and the second terminal being capable of accessing a channel by a specified type of channel access scheme to use some or all of the plurality of transmission resources.

In some embodiments, the IUC information is carried in second-stage Sidelink Control Information (SCI); and for any one of the plurality of transmission resources, when a time interval between a time slot where the transmission resource is located and a time slot where the second-stage SCI is located is smaller than a second time interval, the second terminal is capable of accessing the channel by the specified type of channel access scheme to use the transmission resource.

In some embodiments, the second time interval is a maximum number of time slots included in remaining time of Channel Occupancy Time (COT) generated by the apparatus 1400, the COT being shared with the second terminal.

In some embodiments, the ICU information includes a plurality of Time Resource Indicator Values (TRIVs), each TRIV is used to indicate transmission resources of the second terminal on a plurality of time slots, and the second terminal is capable of accessing the channel by the specified type of channel access scheme to use a first transmission resource and a transmission resource prior to a time slot where the first transmission resource is located. Herein, the first transmission resource is: a transmission resource on a last time slot indicated by a last TRIV of the plurality of TRIVs; or a transmission resource on a last slot indicated by a first TRIV of the plurality of TRIVs.

In some embodiments, the first transmission resource and the transmission resource prior to the time slot where the first transmission resource is located are included in a COT generated by the apparatus 1400, and the COT being shared with the second terminal.

In some embodiments, the IUC information is carried in a Medium Access Control Control Element (MAC CE), and the MAC CE includes second indication information for indicating that the second terminal is capable of accessing the channel by the specified type of channel access scheme to use some or all of the plurality of transmission resources.

In some embodiments, the specified type is Type 2.

FIG. 15 is a fourth schematic structural diagram of a channel access apparatus provided by an embodiment of the disclosure, which is applied to a second terminal. As shown in FIG. 15, the channel access apparatus 1500 (hereinafter simply referred to as apparatus 1500) includes a second receiving unit 1501.

The second receiving unit 1501 is configured to receive Inter-User equipment Coordination (IUC) information from a first terminal, the ICU information being used to indicate a plurality of transmission resources of the apparatus 1500, and the apparatus 1500 being capable of accessing a channel by a specified type of channel access scheme to use some or all of the plurality of transmission resources.

In some embodiments, the IUC information is carried in second-stage Sidelink Control Information (SCI); and for any one of the plurality of transmission resources, when a time interval between a time slot where the transmission resource is located and a time slot where the second-stage SCI is located is smaller than a second time interval, the apparatus 1500 is capable of accessing the channel by the specified type of channel access scheme to use the transmission resource.

In some embodiments, the second time interval is a maximum number of time slots included in remaining time of Channel Occupancy Time (COT) generated by the first terminal, the COT being shared with the apparatus 1500.

In some embodiments, the ICU information includes a plurality of Time Resource Indicator Values (TRIVs), each TRIV is used to indicate transmission resources of the apparatus 1500 on a plurality of time slots, and the apparatus 1500 is capable of accessing the channel by the specified type of channel access scheme to use a first transmission resource and a transmission resource prior to a time slot where the first transmission resource is located. Herein, the first transmission resource is: a transmission resource on a last time slot indicated by a last TRIV of the plurality of TRIVs; or a transmission resource on a last slot indicated by a first TRIV of the plurality of TRIVs.

In some embodiments, the first transmission resource and the transmission resource prior to the time slot where the first transmission resource is located are included in a COT generated by the first terminal, and the COT being shared with the apparatus 1500.

In some embodiments, the IUC information is carried in a Medium Access Control Control Element (MAC CE), and the MAC CE includes second indication information for indicating that the apparatus 1500 is capable of accessing the channel by the specified type of channel access scheme to use some or all of the plurality of transmission resources.

In some embodiments, the specified type is Type 2.

Those skilled in the art should understand that the related description of the above-described channel access apparatus according to the embodiments of the disclosure can be understood with reference to the related description of the channel access method according to the embodiments of the disclosure.

FIG. 16 is a schematic structural diagram of a communication device according to an embodiment of the disclosure. The communication device 1600 illustrated in FIG. 16 includes a processor 1610 that can invoke and run a computer program from a memory to perform the method in the embodiments of the disclosure.

Optionally, as shown in FIG. 16, the communication device 1600 may further include a memory 1620. The processor 1610 may invoke and run a computer program from the memory 1620 to perform the method in the embodiments of the disclosure.

The memory 1620 can be a separate device independent of the processor 1610, or it can be integrated within the processor 1610.

Optionally, as shown in FIG. 16, the communication device 1600 may further include a transceiver 1630, and the processor 1610 may control the transceiver 1630 to communicate with other devices, specifically, may transmit information or data to other devices, or receive information or data transmitted by other devices.

Transceiver 1630 may include a transmitter and a receiver. The transceiver 1630 may further include antennas, and the number of antennas may be one or more.

Optionally, the communication device 1600 may specifically be the first terminal of the embodiments of the disclosure, and the communication device 1600 may perform corresponding procedures performed by the first terminal in each method of the embodiments of the disclosure, which will not be described herein for the sake of brevity.

Optionally, the communication device 1600 may specifically be the second terminal of the embodiments of the disclosure, and the communication device 1600 may perform corresponding procedures performed by the second terminal in each method of the embodiments of the disclosure, which will not be repeated here for the sake of brevity.

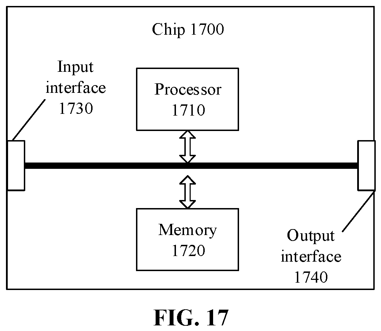

FIG. 17 is a schematic structural diagram of a chip according to an embodiment of the disclosure. The chip 1700 shown in FIG. 17 includes a processor 1710 that can invoke and run a computer program from a memory to perform the method in the embodiments of the disclosure.

Optionally, as shown in FIG. 17, the chip 1700 may further include a memory 1720. The processor 1710 may invoke and run a computer program from the memory 1720 to perform the method in the embodiments of the disclosure.

The memory 1720 can be a separate device independent of the processor 1710, or it can be integrated within the processor 1710.

Optionally, the chip 1700 may further include an input interface 1730. The processor 1710 may control the input interface 1730 to communicate with other devices or chips, specifically, may acquire information or data transmitted by other devices or chips.

Optionally, the chip 1700 may further include an output interface 1740. The processor 1710 may control the output interface 1740 to communicate with other devices or chips, specifically, may output information or data to other devices or chips.

Optionally, the chip can be applied to the first terminal in the embodiments of the disclosure, and the chip can perform corresponding procedures performed by the first terminal in each method of the embodiments of the disclosure, which will not be repeatedly described here for the sake of simplicity.

Optionally, the chip can be applied to the second terminal in the embodiments of the disclosure, and the chip can perform corresponding procedures performed by the second terminal in each method of the embodiments of the disclosure, which will not be repeatedly described here for the sake of simplicity.

It should be understood that the chip mentioned in the embodiments of the disclosure may also be referred to as system-level chip, system chip, chip system, or System-on-Chip (SoC), among other terms.

It should be understood that the processor of the embodiments of the disclosure may be an integrated circuit chip having signal processing capabilities. In the implementation process, the steps of the above-described method embodiments may be performed by integrated logic circuits of hardware in the processor or instructions in the form of software. The processor may be a general purpose processor, a Digital Signal Processor (DSP), an Application Specific Integrated Circuit (ASIC), a Field Programmable Gate Array (FPGA) or other programmable logic device, a discrete gate or transistor logic device, or a discrete hardware component. The methods, steps, and logical block diagrams disclosed in the embodiments of the disclosure may be implemented or executed. The general-purpose processor may be a microprocessor, or the processor may be any conventional processor or the like. The steps of the method disclosed in the embodiments of the disclosure may be directly embodied as execution by a hardware decoding processor, or execution by hardware and software modules in the decoding processor. The software module may be located in a mature storage medium in the art, such as random access memory, flash memory, read-only memory, programmable read-only memory, electrically erasable and writable programmable memory, or register, etc. The storage medium is located in the memory, and the processor reads the information in the memory, and performs the steps of the above methods in combination with its hardware.

It can be understood that the memory in the embodiments of the disclosure may be either volatile memory or non-volatile memory, or may include both volatile and non-volatile memories. The non-volatile memory can be Read-Only Memory (ROM), Programmable ROM (PROM), Erasable Programmable ROM (EPROM), Electrically Erasable Programmable ROM (EEPROM), or Flash memory. The volatile memory can be Random Access Memory (RAM), which serves as external high-speed cache. By way of illustration, but not by way of limitation, many forms of RAM are available, such as Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced Synchronous Dynamic Random Access Memory (ESDRAM), Synchlink Dynamic Random Access Memory (SLDRAM), and Direct Rambus Random Access Memory (DR RAM). It should be noted that the memory of the systems and methods described herein is intended to include, but is not limited to, these and any other suitable type of memory.

It should be understood that the above memory is illustrative but not limiting, for example, the memory in the embodiments of the disclosure may also be Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced Synchronous Dynamic Random Access Memory (ESDRAM), SynchLink Dynamic Random Access Memory (SLDRAM), Direct Rambus Random Access Memory (DR RAM), and so on. In other words, the memory in the embodiments of the disclosure is intended to include, but is not limited to, these and any other suitable types of memory.

An embodiment of the disclosure further provides a computer-readable storage medium for storing a computer program.

Optionally, the computer-readable storage medium can be applied to the first terminal in the embodiments of the disclosure, and the computer program enables the computer to perform corresponding procedures performed by the first terminal in various methods described in the embodiments of the disclosure. For brevity, details thereof are not repeated here.

Optionally, the computer-readable storage medium can be applied to the second terminal in the embodiments of the disclosure, and the computer program enables the computer to perform corresponding procedures performed by the second terminal in various methods described in the embodiments of the disclosure. For brevity, details thereof are not repeated here.

An embodiment of the disclosure further provides a computer program product including computer program instructions.

Optionally, the computer program product can be applied to the first terminal in the embodiments of the disclosure, and the computer program instructions enable the computer to perform the corresponding procedures performed by the first terminal in various methods described in the embodiments of the disclosure. For brevity, details thereof are not repeated here.

Optionally, the computer program product can be applied to the second terminal in the embodiments of the disclosure, and the computer program instructions enable the computer to perform the corresponding procedures performed by the second terminal in various methods described in the embodiments of the disclosure. For brevity, details thereof are not repeated here.

An embodiment of the disclosure further provides a computer program.

Optionally, the computer program can be applied to the first terminal in the embodiments of the disclosure, and when run on a computer, the computer program enables the computer to perform the corresponding procedures performed by the first terminal in various methods described in the embodiments of the disclosure. For brevity, details thereof are not repeated here.

Optionally, the computer program can be applied to the second terminal in the embodiments of the disclosure, and when run on a computer, the computer program enables the computer to perform the corresponding procedures performed by the second terminal in various methods described in the embodiments of the disclosure. For brevity, details thereof are not repeated here.

Those of ordinary skill in the art will appreciate that the units and algorithmic steps of the various examples described in the embodiments disclosed herein can be implemented in electronic hardware, in computer software, or in a combination of computer software and electronic hardware. Whether these functions are performed in hardware or software depends on the specific application and design constraints of the technical solution. Those skilled in the art may use different methods for implementing the described functions for each particular application, but such implementations should not be considered as going beyond the scope of the disclosure.

Those skilled in the art can clearly understand that for convenience and conciseness of the description, for the specific working processes of the systems, devices, and units described above, reference may be made to the corresponding processes in the aforementioned method embodiments, which will not be repeatedly described herein.

In the several embodiments provided in the disclosure, it is to be understood that the disclosed systems, devices and method may be implemented in other modes. For example, the device embodiments described above are only schematic, and for example, division of the units is only logic function division, and other division manners may be adopted during practical implementation. For example, multiple units or components may be combined or integrated into another system, or some features may be neglected or not executed. In addition, the displayed or discussed mutual couplings or direct couplings or communication connections may be implemented by using some interfaces. The indirect couplings or communication connections between the devices or units may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the solutions of the embodiments of the disclosure.

In addition, functional units in various embodiments of the disclosure may be integrated into one processing unit, or each of the units may be physically separated, or two or more units may be integrated into one unit.

When the aforementioned functions are implemented in the form of software functional units and sold or used as independent products, the software functional units can be stored in a computer-readable storage medium. Based on this understanding, the core or contributory part of the technical solution of the disclosure with respect to the prior part, or portions thereof, can be embodied in the form of a software product. This computer software product is stored in a storage medium and includes several instructions that enable a computer device (which can be a personal computer, server, network device, etc.) to perform all or part of the steps described in the various embodiments of the disclosure. The storage medium includes various media capable of storing program codes, such as USB flash drive, mobile hard disk, Read-Only Memory (ROM), Random Access Memory (RAM), magnetic disk or an optical disk.

What described above are only the specific implementations of the disclosure, but the scope of protection of the disclosure is not limited thereto. Any variation or replacement readily figured out by a person skilled in the art within the technical scope disclosed in the disclosure shall fall within the scope of protection of the disclosure. Therefore, the scope of protection of the disclosure is defined by the scope of protection of the claims.

## Claims

1. A channel access method, applied to a first terminal, the method comprising:
transmitting a first Physical Sidelink Feedback Channel (PSFCH) to a second terminal, the first PSFCH being used to instruct the second terminal to access a channel by a specified type of channel access scheme to use a reserved resource of the second terminal.

2. The method of claim 1, wherein the first PSFCH is located in the time domain in:
a last PSFCH transmission opportunity prior to the reserved resource; or,
a last PSFCH transmission opportunity prior to a first moment,
wherein the first moment is prior to a time slot where the reserved resource is located, and a time interval between the first moment and a start moment of the time slot where the reserved resource is located is a sum of a maximum duration of a currently configured extended cyclic prefix and a first duration, the first duration being defined by a standard, configured by a network, or preconfigured.

3. The method of claim 1 or 2, wherein the first PSFCH is located in the frequency domain in:
a first Interlaced Resource Block (IRB) in an IRB set; or,
a first common IRB and at least one dedicated Physical Resource Block (PRB) in a dedicated PRB set.

4. The method of claim 1, wherein the first PSFCH is located in the time domain in:
a plurality of PSFCH transmission opportunities,
wherein among the plurality of PSFCH transmission opportunities, a time interval between two adjacent PSFCH transmission opportunities is a first time interval, and a last PSFCH transmission opportunity among the plurality of PSFCH transmission opportunities is:
a last PSFCH transmission opportunity prior to the reserved resource; or,
a last PSFCH transmission opportunity prior to a first moment,
wherein the first moment is prior to a time slot where the reserved resource is located, and a time interval between the first moment and a start moment of the time slot where the reserved resource is located is a sum of a maximum duration of a currently configured extended cyclic prefix and a first duration, the first duration being defined by a standard, configured by a network, or preconfigured.

5. The method of claim 4, wherein
the first time interval is configured by the network, preconfigured, or predefined.

6. The method of claim 4 or 5, wherein for any one of the plurality of PSFCH transmission opportunities, a first PSFCH on the PSFCH transmission opportunity is located in the frequency domain in:
a first IRB in an IRB set corresponding to the PSFCH transmission opportunity; or,
a first common IRB corresponding to the PSFCH transmission opportunity, and at least one dedicated PRB in a dedicated PRB set corresponding to the PSFCH transmission opportunity.

7. The method of claim 3 or 6, wherein
IRBs in the IRB set do not overlap with an IRB for transmitting a second PSFCH;
the dedicated PRB set does not overlap with a PRB set for transmitting the second PSFCH; and
the first common IRB is the same as a common IRB for transmitting the second PSFCH,
wherein the second PSFCH comprises a PSFCH for feeding back Hybrid Automatic Repeat reQuest-Acknowledgment (HARQ-ACK), and a PSFCH for indicating resource conflict.

8. The method of claim 3, 6 or 7, wherein
the IRB set is preconfigured, or configured by first signaling; and
the dedicated PRB set is preconfigured, or configured by second signaling.

9. The method of claim 1, wherein
resources occupied by the first PSFCH are the same as resources occupied by a PSFCH for indicating resource conflict, and a sequence cyclic shift of the first PSFCH is different from a sequence cyclic shift of the PSFCH for indicating resource conflict.

10. The method of any one of claims 1 to 9, wherein transmitting the first PSFCH to the second terminal comprises:
transmitting the first PSFCH to the second terminal when the first terminal satisfies a first condition.

11. The method of any one of claims 1 to 10, wherein
resources occupied by the first PSFCH are associated with the reserved resource.

12. The method of claim 1, wherein
resources occupied by the first PSFCH are associated with a Physical Sidelink Shared Channel (PSSCH) from the second terminal, and the reserved resource is used for retransmission of the PSSCH.

13. The method of claim 12, wherein transmitting the first PSFCH to the second terminal comprises:
transmitting the first PSFCH to the second terminal when the first terminal does not decode the PSSCH successfully and the first terminal satisfies a first condition, the first PSFCH being further used to indicate Negative Acknowledgement (NACK).

14. The method of claim 10 or 13, wherein the first condition comprises at least one of:
a moment when the first terminal generates Channel Occupancy Time (COT) is prior to a PSFCH transmission opportunity where the first PSFCH is located, and a duration of the COT comprises a time slot where the reserved resource is located;
a value of a Channel Access Priority Class (CAPC) used by the first terminal to generate the COT is greater than or equal to a first value;
the first terminal is a destination receiving terminal to which the second terminal will send data on the reserved resource;
a destination identifier indicated in Sidelink Control Information (SCI) for indicating the reserved resource is an identifier of the first terminal;
a unicast connection exists between the first terminal and the second terminal; or
at the PSFCH transmission opportunity where the first PSFCH is located, the first terminal does not satisfy a condition for indicating resource conflict to the second terminal.

15. The method of any one of claims 1 to 14, wherein
when the second terminal accesses the channel by the specified type of channel access scheme to use the reserved resource of the second terminal, the reserved resource is used by the second terminal to transmit a sidelink channel, wherein a destination identifier of the sidelink channel comprises an identifier of the first terminal, and the identifier of the first terminal is the same as a destination identifier indicated in SCI for indicating the reserved resource.

16. The method of any one of claims 1 to 15, wherein
the specified type is Type 2.

17. A channel access method, applied to a second terminal, the method comprising:
receiving a first Physical Sidelink Feedback Channel (PSFCH) from a first terminal, the first PSFCH being used to instruct the second terminal to access a channel by a specified type of channel access scheme to use a reserved resource of the second terminal.

18. The method of claim 17, wherein the first PSFCH is located in the time domain in:
a last PSFCH transmission opportunity prior to the reserved resource; or,
a last PSFCH transmission opportunity prior to a first moment,
wherein the first moment is prior to a time slot where the reserved resource is located, and a time interval between the first moment and a start moment of the time slot where the reserved resource is located is a sum of a maximum duration of a currently configured extended cyclic prefix and a first duration, the first duration being defined by a standard, configured by a network, or preconfigured.

19. The method of claim 17 or 18, wherein the first PSFCH is located in the frequency domain in:
a first Interlaced Resource Block (IRB) in an IRB set; or,
a first common IRB and at least one dedicated Physical Resource Block (PRB) in a dedicated PRB set.

20. The method of claim 17, wherein the first PSFCH is located in the time domain in:
a plurality of PSFCH transmission opportunities,
wherein among the plurality of PSFCH transmission opportunities, a time interval between two adjacent PSFCH transmission opportunities is a first time interval, and a last PSFCH transmission opportunity among the plurality of PSFCH transmission opportunities is:
a last PSFCH transmission opportunity prior to the reserved resource; or,
a last PSFCH transmission opportunity prior to a first moment,
wherein the first moment is prior to a time slot where the reserved resource is located, and a time interval between the first moment and a start moment of the time slot where the reserved resource is located is a sum of a maximum duration of a currently configured extended cyclic prefix and a first duration, the first duration being defined by a standard, configured by a network, or preconfigured.

21. The method of claim 20, wherein
the first time interval is configured by the network, preconfigured, or predefined.

22. The method of claim 20 or 21, wherein for any one of the plurality of PSFCH transmission opportunities, a first PSFCH on the PSFCH transmission opportunity is located in the frequency domain in:
a first IRB in an IRB set corresponding to the PSFCH transmission opportunity; or,
a first common IRB corresponding to the PSFCH transmission opportunity, and at least one dedicated PRB in a dedicated PRB set corresponding to the PSFCH transmission opportunity.

23. The method of claim 19 or 22, wherein
IRBs in the IRB set do not overlap with an IRB for transmitting a second PSFCH;
the dedicated PRB set does not overlap with a PRB set for transmitting the second PSFCH; and
the first common IRB is the same as a common IRB for transmitting the second PSFCH,
wherein the second PSFCH comprises a PSFCH for feeding back Hybrid Automatic Repeat reQuest-Acknowledgment (HARQ-ACK), and a PSFCH for indicating resource conflict.

24. The method of claim 19, 22 or 23, wherein
the IRB set is preconfigured, or configured by first signaling; and
the dedicated PRB set is preconfigured, or configured by second signaling.

25. The method of any one of claims 17 to 24, further comprising:
receiving first indication information, wherein the first indication information is used to indicate that resource conflict occurs on the reserved resource.

26. The method of claim 25, further comprising:
in a case where a moment when the first indication information is received is earlier than a moment when the first PSFCH is received, accessing the channel by the specified type of channel access scheme to use the reserved resource of the second terminal;
in a case where the moment when the first indication information is received is later than the moment when the first PSFCH is received, reselecting the reserved resource.

27. The method of claim 25, further comprising:
reselecting the reserved resource.

28. The method of claim 17, wherein
resources occupied by the first PSFCH are the same as resources occupied by a PSFCH for indicating resource conflict, and a sequence cyclic shift of the first PSFCH is different from a sequence cyclic shift of the PSFCH for indicating resource conflict.

29. The method of any one of claims 17 to 28, wherein
resources occupied by the first PSFCH are associated with the reserved resource.

30. The method of claim 17, wherein
resources occupied by the first PSFCH are associated with a Physical Sidelink Shared Channel (PSSCH) transmitted by the second terminal, and the reserved resource is used for retransmission of the PSSCH.

31. The method of claim 30, wherein
the first PSFCH is further used to indicate Negative Acknowledgement (NACK).

32. The method of any one of claims 17 to 31, wherein
when the second terminal accesses the channel by the specified type of channel access scheme to use the reserved resource of the second terminal, the reserved resource is used by the second terminal to transmit a sidelink channel, wherein a destination identifier of the sidelink channel comprises an identifier of the first terminal, and the identifier of the first terminal is the same as a destination identifier indicated in Sidelink Control Information (SCI) for indicating the reserved resource.

33. The method of any one of claims 17 to 32, wherein
the specified type is Type 2.

34. A channel access method, applied to a first terminal, the method comprising:
transmitting Inter-User equipment Coordination (IUC) information to a second terminal, the ICU information being used to indicate a plurality of transmission resources of the second terminal, and the second terminal being capable of accessing a channel by a specified type of channel access scheme to use some or all of the plurality of transmission resources.

35. The method of claim 34, wherein
the IUC information is carried in second-stage Sidelink Control Information (SCI); and
for any one of the plurality of transmission resources, when a time interval between a time slot where the transmission resource is located and a time slot where the second-stage SCI is located is smaller than a second time interval, the second terminal is capable of accessing the channel by the specified type of channel access scheme to use the transmission resource.

36. The method of claim 35, wherein
the second time interval is a maximum number of time slots comprised in remaining time of Channel Occupancy Time (COT) generated by the first terminal, the COT being shared with the second terminal.

37. The method of any one of claims 34 to 36, wherein
the ICU information comprises a plurality of Time Resource Indicator Values (TRIVs), each TRIV is used to indicate transmission resources of the second terminal on a plurality of time slots, and the second terminal is capable of accessing the channel by the specified type of channel access scheme to use a first transmission resource and a transmission resource prior to a time slot where the first transmission resource is located,
wherein the first transmission resource is:
a transmission resource on a last time slot indicated by a last TRIV of the plurality of TRIVs; or
a transmission resource on a last slot indicated by a first TRIV of the plurality of TRIVs.

38. The method of claim 37, wherein
the first transmission resource and the transmission resource prior to the time slot where the first transmission resource is located are comprised in a COT generated by the first terminal, and the COT being shared with the second terminal.

39. The method of claim 34, wherein
the IUC information is carried in a Medium Access Control Control Element (MAC CE), and
the MAC CE comprises second indication information for indicating that the second terminal is capable of accessing the channel by the specified type of channel access scheme to use some or all of the plurality of transmission resources.

40. The method of any one of claims 34 to 39, wherein
the specified type is Type 2.

41. A channel access method, applied to a second terminal, the method comprising:
receiving Inter-User equipment Coordination (IUC) information from a first terminal, the ICU information being used to indicate a plurality of transmission resources of the second terminal, and the second terminal being capable of accessing a channel by a specified type of channel access scheme to use some or all of the plurality of transmission resources.

42. The method of claim 41, wherein
the IUC information is carried in second-stage Sidelink Control Information (SCI); and
for any one of the plurality of transmission resources, when a time interval between a time slot where the transmission resource is located and a time slot where the second-stage SCI is located is smaller than a second time interval, the second terminal is capable of accessing the channel by the specified type of channel access scheme to use the transmission resource.

43. The method of claim 42, wherein
the second time interval is a maximum number of time slots comprised in remaining time of Channel Occupancy Time (COT) generated by the first terminal, the COT being shared with the second terminal.

44. The method of any one of claims 41 to 43, wherein
the ICU information comprises a plurality of Time Resource Indicator Values (TRIVs), each TRIV is used to indicate transmission resources of the second terminal on a plurality of time slots, and the second terminal is capable of accessing the channel by the specified type of channel access scheme to use a first transmission resource and a transmission resource prior to a time slot where the first transmission resource is located,
wherein the first transmission resource is:
a transmission resource on a last time slot indicated by a last TRIV of the plurality of TRIVs; or
a transmission resource on a last slot indicated by a first TRIV of the plurality of TRIVs.

45. The method of claim 44, wherein
the first transmission resource and the transmission resource prior to the time slot where the first transmission resource is located are comprised in a COT generated by the first terminal, and the COT being shared with the second terminal.

46. The method of claim 41, wherein
the IUC information is carried in a Medium Access Control Control Element (MAC CE), and
the MAC CE comprises second indication information for indicating that the second terminal is capable of accessing the channel by the specified type of channel access scheme to use some or all of the plurality of transmission resources.

47. The method of any one of claims 41 to 46, wherein
the specified type is Type 2.

48. A channel detection apparatus, comprising:
a first transmitting unit, configured to transmit a first Physical Sidelink Feedback Channel (PSFCH) to a second terminal, the first PSFCH being used to instruct the second terminal to access a channel by a specified type of channel access scheme to use a reserved resource of the second terminal.

49. A channel detection apparatus, comprising:
a first receiving unit, configured to receive a first Physical Sidelink Feedback Channel (PSFCH) from a first terminal, the first PSFCH being used to instruct the second terminal to access a channel by a specified type of channel access scheme to use a reserved resource of the second terminal.

50. A channel detection apparatus, comprising:
a second transmitting unit, configured to transmit Inter-User equipment Coordination (IUC) information to a second terminal, the ICU information being used to indicate a plurality of transmission resources of the second terminal, and the second terminal being capable of accessing a channel by a specified type of channel access scheme to use some or all of the plurality of transmission resources.

51. A channel detection apparatus, comprising:
a second receiving unit, configured to receive Inter-User equipment Coordination (IUC) information from a first terminal, the ICU information being used to indicate a plurality of transmission resources of the second terminal, and the second terminal being capable of accessing a channel by a specified type of channel access scheme to use some or all of the plurality of transmission resources.

52. A terminal, comprising a processor, and a memory for storing a computer program, wherein the processor is configured to invoke and execute the computer program stored in the memory to perform the method of any one of claims 1 to 16, or the method of any one of claims 17 to 33, or the method of any one of claims 34 to 40, or the method of any one of claims 41 to 47.

53. A chip, comprising: a processor configured to invoke and execute a computer program from a memory to cause a device mounted with the chip to perform the method of any one of claims 1 to 16, or the method of any one of claims 17 to 33, or the method of any one of claims 34 to 40, or the method of any one of claims 41 to 47.

54. A computer-readable storage medium for storing a computer program that causes a computer to perform the method of any one of claims 1 to 16, or the method of any one of claims 17 to 33, or the method of any one of claims 34 to 40, or the method of any one of claims 41 to 47.

55. A computer program product, comprising computer program instructions that cause a computer to perform the method of any one of claims 1 to 16, or the method of any one of claims 17 to 33, or the method of any one of claims 34 to 40, or the method of any one of claims 41 to 47.

56. A computer program, causing a computer to perform the method of any one of claims 1 to 16, or the method of any one of claims 17 to 33, or the method of any one of claims 34 to 40, or the method of any one of claims 41 to 47.
